# FASCICULE DE BREVET EUROPEEN

(11) **EP 1 598 320 B1**
(45) Date de publication et mention de la délivrance du brevet: **09.05.2007**
(21) Numéro de dépôt: 04291298.0
(22) Date de dépôt: 21.05.2004
(51) Int. Cl.: C02F 3/06

(54) **Filtre biologique pour le traitement d'effluents usés**
Biologischer Filter zur Abwasserbehandlung
Biological filter for treating effluents

(43) Date de publication de la demande: 23.11.2005
(73) Titulaire: Ergalia, 75015 Paris (FR)
(72) Inventeur: Philip, Hervé, 34660 Cournonsec (FR); Maunoir, Siegfried, 34560 Montbazin (FR)
(74) Mandataire: Derambure, Christian

(56) Documents cités:
- EP-A- 0 347 296
- EP-A- 0 442 157

## Description

L'invention concerne un filtre biologique pour le traitement des effluents usés, un procédé de filtration utilisant un tel filtre, une installation de filtration comprenant une pluralité de tels filtres, ainsi qu'une station d'épuration comprenant au moins un tel filtre ou une telle installation de filtration.

L'invention concerne plus particulièrement un filtre biologique, ou « biofiltre », dans lequel une biomasse contenant des micro-organismes appropriés est fixée sur un support immergé. Les effluents à filtrer peuvent contenir des matières en suspension, organiques et/ou minérales, qui sont retenues dans le filtre, ainsi que des impuretés organiques dissoutes ou particulaires, qui sont transformées par l'action de la biomasse.

Parmi les filtres biologiques existants, on connaît déjà des filtres dits « aérés », dans lesquels on introduit de l'air ou de l'oxygène pur en même temps que les effluents à filtrer, de sorte à intensifier les réactions biologiques mises en oeuvre par la biomasse. En particulier, on connaît les filtres fonctionnant à flux ascendant d'effluents, et à co-courant, ce qui signifie que les flux d'effluents et d'air sont orientés dans le même sens, de bas en haut. Cet agencement favorise notamment la rétention des matières en suspension.

Pour maintenir les capacités hydrauliques et épuratoires de tels filtres, il est nécessaire d'éliminer régulièrement, par lavage, la biomasse excédentaire qui colmate le support. Cette biomasse résulte d'une part du développement des micro-organismes (biofilm) et d'autre part de la rétention des matières en suspension et de la transformation des impuretés organiques.

On connaît notamment du document FR-A-2 632 947 un filtre dont la biomasse est fixée sur un support flottant, la faible densité du support étant destinée à en faciliter le lavage. Dans ce type de filtres, le lavage est effectué par injection d'eau épurée à contre-courant, et à fort débit, de sorte à détasser les matériaux formant support.

Toutefois, la nécessité d'un tel lavage présente plusieurs inconvénients. En effet, les cycles réguliers de lavage consomment de l'énergie, et rendent le système de filtration complexe.

En outre, la totalité du support est lavée à chaque cycle, alors que, du fait de son hétérogénéité, il serait parfois suffisant de n'en laver qu'une fraction.

Enfin, dans certains cas, il est nécessaire d'injecter dans le filtre de l'eau supplémentaire pour le lavage, ce qui peut entraîner une dilution trop importante des boues, et obliger à les reconcentrer dans un décanteur.

L'invention propose un filtre biologique à flux ascendant, et à co-courant, agencé pour pallier ces différents inconvénients.

A cet effet, et selon un premier aspect, l'invention propose un filtre pour le traitement des effluents usés par voie biologique, ledit filtre étant destiné à la rétention des matières en suspension et à la transformation biologique des impuretés organiques contenues dans les effluents à filtrer, ledit filtre comprenant un réacteur dans lequel le flux d'effluents à filtrer est prévu pour circuler de bas en haut, ledit réacteur comprenant :
- en partie basse, une entrée des effluents à filtrer et une entrée de gaz oxygéné ;
- et, en partie haute, une sortie des effluents filtrés ;
- des moyens filtrants comprenant des couches de particules d'un matériau solide formant supports et une biomasse accrochée sur la surface desdits supports, lesdits moyens filtrants ayant une densité inférieure à la densité des effluents à filtrer et étant interposés entre l'entrée des effluents à filtrer et la sortie des effluents filtrés.

Selon une définition générale de l'invention, le réacteur est subdivisé en au moins trois compartiments superposés formant étages au moyen d'au moins deux parois munies d'ouvertures, lesdites ouvertures étant agencées pour retenir les moyens filtrants, de sorte à former dans le réacteur au moins deux étages de filtration et un étage supérieur de sortie, la sortie des effluents filtrés débouchant dans l'étage supérieur de sortie, chaque étage de filtration étant pourvu d'une couche de ses propres moyens filtrants, et comprenant, en partie inférieure, une sortie de soutirage de la biomasse excédentaire, la quantité et la densité des moyens filtrants dans chaque étage de étant telles que, en mode soutirage, la partie inférieure d'au moins le ou les étages inférieurs dans laquelle débouche la sortie de soutirage est exempte de moyens filtrants, de manière à permettre la récupération de la biomasse excédentaire.

Le filtre selon l'invention présente ainsi plusieurs étages de filtration qui peuvent être débarrassés indépendamment les uns des autres de leur biomasse excédentaire, ce qui permet de mettre en oeuvre le lavage de façon sélective, en déterminant, au fur et à mesure du procédé de filtration, quelle fraction du support nécessite d'être lavée.

La présence de plusieurs étages de filtration présente également l'avantage de permettre une filtration modulable, en adaptant de façon optimale le support de biomasse dans chaque étage de filtration, ce qui résulte en une efficacité accrue du processus de filtration.

Selon une réalisation possible, au moins deux étages de filtration comprennent des moyens filtrants différents, de par la nature de leur support et/ou de la biomasse fixée, et diffèrent par exemple par leur densité.

Selon un deuxième aspect, l'invention concerne un procédé de filtration biologique des effluents usés mettant en oeuvre un filtre tel que précédemment décrit, ledit procédé comportant une phase de lavage et une phase de filtration comprenant les étapes consistant à :
- alimenter le réacteur en effluents à filtrer et en gaz oxygéné, selon un courant ascendant, par l'entrée des effluents à filtrer et l'entrée de gaz oxygéné, respectivement ;
- faire circuler ledit gaz et lesdits effluents de façon ascendante dans les différents étages de filtration successifs, de sorte à filtrer lesdits effluents ;
- récupérer les effluents filtrés par la sortie du réacteur; et une phase de lavage au cours de laquelle lesdits étages de filtration peuvent être débarassés indépendamment les uns des autres de leur biomasse excédentaire ce qui permet de mettre en oeuvre le lavage de façon sélective.

Avantageusement, la phase de lavage correspond à une phase de lavage d'au moins un étage de filtration, au cours de laquelle :
- on ferme l'entrée des effluents à filtrer et l'entrée de gaz oxygéné du réacteur ;
- puis on ouvre la sortie de soutirage de l'étage à laver, de sorte à entraîner la biomasse excédentaire par vidange, par différence de pression entre le haut du réacteur et ladite sortie de soutirage.

Selon un troisième aspect, l'invention a pour objet une installation de filtration, comprenant une pluralité de filtres tels que précédemment décrits, disposés de sorte à fonctionner en parallèle.

L'installation comprend une entrée des effluents à filtrer connectée à l'entrée des effluents à filtrer de chacun des filtres, une entrée de gaz oxygéné, connectée à l'entrée de gaz oxygéné de chacun des filtres, une sortie des effluents filtrés connectée à la sortie de chacun des filtres, et au moins une sortie de soutirage connectée aux sorties de soutirage de chacun des filtres.

L'installation comprend en outre des moyens de coupure sélectifs de l'alimentation en effluents à filtrer et en gaz oxygéné de chacun des filtres, des moyens de commande de la filtration, de l'arrêt et de la récupération de la biomasse excédentaire, de sorte à permettre simultanément la filtration des effluents à filtrer par un nombre minimal de filtres, et l'arrêt des autres filtres en vue de la récupération de la biomasse excédentaire et/ou de et la dénitrification d'au moins une partie des effluents filtrés dans lesdits autres filtres.

Enfin, selon un quatrième aspect, l'invention concerne une station d'épuration d'effluents usés comprenant au moins un tel filtre ou une telle installation de filtration.

D'autres objets et avantages de l'invention apparaîtront au cours de la description qui suit, faite en référence aux figures annexées, dans lesquelles :
- les figures 1 à 4 sont des vues schématiques en coupe verticale longitudinale d'un filtre selon l'invention, respectivement selon un premier, un deuxième, un troisième et un quatrième modes de réalisation ;
- les figures 5a et 5b sont des vues schématiques en coupe verticale longitudinale du filtre de la figure 1, représentant la mise en oeuvre du procédé de traitement des effluents usés pendant la phase de filtration, (figure 5a), et pendant la phase de lavage (figure 5b) ;
- les figures 6a, 6b, 6c et 6d sont des schémas montrant les différentes possibilités d'envoi des flux d'effluents et de gaz ;
- la figure 7 est une représentation schématique d'une installation de filtration selon l'invention, comprenant trois filtres tels que celui représenté sur la figure 1, lesdits filtres fonctionnant en parallèle et étant représentés en coupe verticale longitudinale ;
- la figure 8 est une représentation schématique d'une station d'épuration selon l'invention, comprenant notamment un filtre ou une installation de filtration, un décanteur et un digesteur anaérobie de boues, illustrant en outre les étapes d'un procédé de traitement des effluents usés dans ladite station d'épuration ;
- la figure 9 est une vue schématique en coupe transversale d'un mode de réalisation possible d'un décanteur prévu dans la station d'épuration ;
- la figure 10 est une vue schématique en coupe du décanteur de la figure 9, selon la ligne AA ;
- la figure 11 est une vue en coupe du décanteur de la figure 9, selon la ligne BB de la figure 10 ;
- la figure 12 est une vue schématique en coupe, selon un plan vertical longitudinal médian, d'un digesteur prévu dans la station d'épuration, selon un mode de réalisation possible ;
- la figure 13 est une vue schématique en perspective du digesteur de la figure 12, vu selon la même coupe.

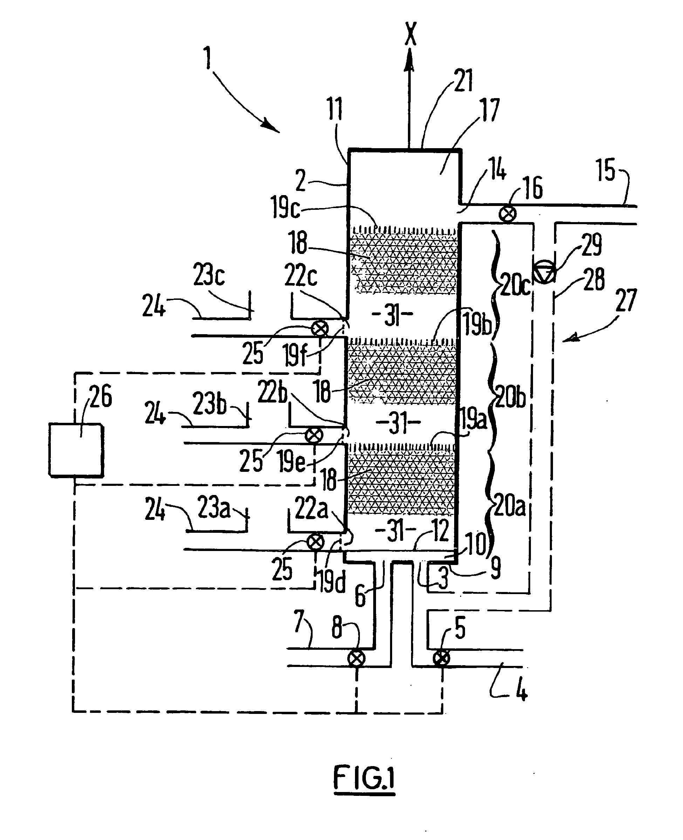

On se rapporte tout d'abord aux figures 1 à 3 qui représentent un filtre biologique 1, selon différents modes de réalisation.

Le filtre 1 est destiné au traitement par voie biologique des effluents usés. Il est destiné en particulier au traitement d'effluents ayant subi au préalable une étape de décantation destinée à éliminer une part importante de leurs matières en suspension.

Un tel filtre assure plusieurs fonctions épuratrices en combinaison :
- la transformation biologique des impuretés organiques dissoutes dans les effluents à filtrer, sous l'action de micro-organismes aérobies épurateurs qui permettent d'une part de diminuer la pollution carbonée par transformation du carbone organique en carbone minéral, et d'autre part de transformer l'azote organique par nitrification et de l'éliminer par dénitrification ;
- la rétention des matières en suspension, par passage des effluents à filtrer au travers de moyens filtrants ;
- l'élimination des matières en suspension organiques.

Comme il sera exposé, un tel filtre 1 peut être inclus dans une installation qui en comporte plusieurs et, plus généralement, dans une station d'épuration comprenant en outre au moins un décanteur et un digesteur anaérobie de boues.

Le filtre 1 comprend un réacteur fermé 2, ici de forme sensiblement cylindrique, définissant un axe principal longitudinal X. Le réacteur 2 peut également être de forme sensiblement parallélépipédique. Le réacteur 2 est disposé de sorte que son axe principal X soit orienté sensiblement verticalement.

Dans le réacteur 2, le flux d'effluents à filtrer est prévu pour circuler dans la direction longitudinale, de bas en haut, en vue d'être filtré biologiquement.

Le réacteur 2 comprend, en partie basse, une entrée 3 des effluents à filtrer, reliée à un conduit d'alimentation 4 muni d'une vanne 5, et une entrée 6 de gaz oxygéné, reliée à un conduit d'alimentation 7 muni d'une vanne 8. L'alimentation en gaz oxygéné, tel que de l'air, est destinée à faire pénétrer dans le réacteur 2 l'oxygène nécessaire au développement de micro-organismes aérobies utilisés pour la filtration.

Selon un premier mode de réalisation, représenté sur la figure 1, les deux entrées 3, 6 sont prévues dans la paroi inférieure 9 du réacteur 2 et permettent de faire pénétrer les effluents à filtrer et le gaz oxygéné dans un compartiment d'entrée 10. Le compartiment d'entrée 10 est délimité par la paroi inférieure 9, une partie de la paroi latérale 11 du réacteur, et par une paroi supérieure interne 12 s'étendant transversalement, sur toute la largeur du réacteur 2. La paroi interne 12 est perméable aux effluents à filtrer et au gaz oxygéné, de sorte à autoriser le passage ascendant des effluents et du gaz à travers elle.

La présence d'un tel compartiment d'entrée 10 a pour fonction de permettre une bonne répartition des flux d'effluents à filtrer et de gaz oxygéné au sein du réacteur 2, quels que soient les débits d'entrée des effluents et du gaz. Par conséquent, on obtient un traitement optimal des effluents.

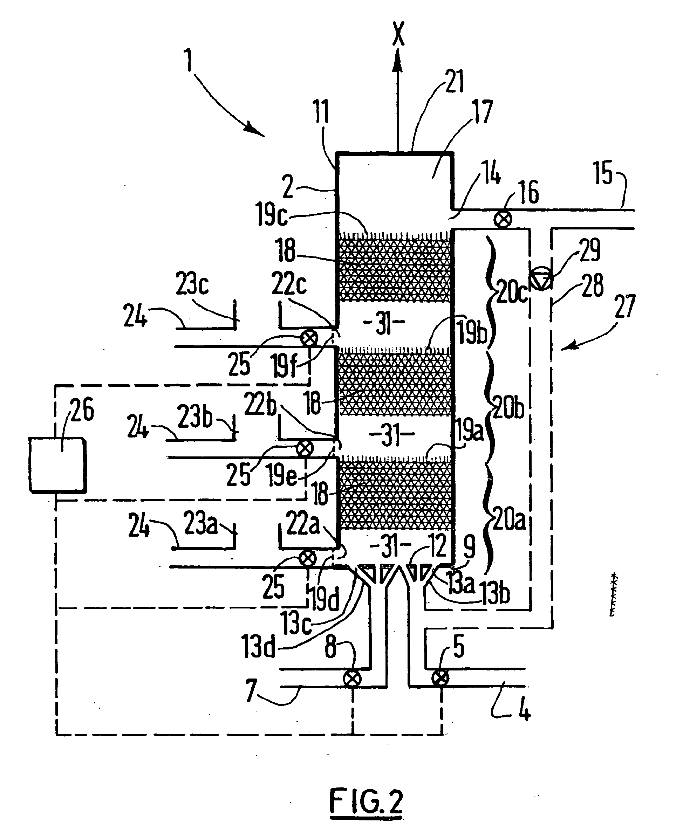

Toutefois, on peut également prévoir que les flux d'effluents à filtrer et de gaz pénètrent dans le réacteur 2 sans passer par un tel compartiment d'entrée 10. A cet effet, selon un deuxième mode de réalisation, représenté sur la figure 2, la paroi inférieure 9 du réacteur 2 comprend :
- d'une part une pluralité d'ouvertures 13a, formant entrée 3, reliées chacune à un conduit 13b, lesdits conduits 13b étant eux-mêmes reliés au conduit d'alimentation 4 en effluents à filtrer ;
- d'autre part une pluralité d'ouvertures 13c, formant entrée 6, reliées chacune à un conduit 13d, lesdits conduits 13d étant eux-mêmes reliés au conduit d'alimentation 7 en gaz oxygéné.

Les ouvertures 13a, 13c sont ménagées dans la paroi inférieure 9 de sorte à assurer une bonne répartition des flux d'effluents et de gaz. Il peut être prévu en outre un ou plusieurs diffuseurs de fines bulles de gaz, par exemple d'air, permettant une répartition homogène du gaz au sein du flux d'effluents à filtrer.

La sortie 14 des effluents filtrés est quant à elle située en partie haute du réacteur 2. Selon les réalisations représentées, cette sortie 14, reliée à un conduit d'évacuation 15 des effluents filtrés muni d'une vanne 16, est ménagée dans la paroi latérale 11, et débouche dans un étage supérieur de sortie 17 du réacteur 2. L'évacuation des effluents filtrés est effectuée par surverse.

Ainsi, le filtre 1 est du type à flux d'effluents ascendant, l'alimentation en gaz oxygéné étant réalisée à co-courant.

Le filtre 1 comprend, à l'intérieur du réacteur 2, et interposés entre l'entrée 3 des effluents à filtrer et la sortie 14 des effluents filtrés, des moyens filtrants 18. Les moyens filtrants 18 comprennent des couches de particules d'un matériau solide microporeux formant supports, et une biomasse épuratrice accrochée sur la surface desdits supports. Pour ce faire, les supports ont été préalablement ensemencés avec des micro-organismes aérobies qui se sont développés sur lesdits supports et s'y sont accrochés. Lors de la mise en oeuvre de la filtration, le fait que la biomasse est accrochée à un support permet d'optimiser le contact entre les matières polluantes à traiter et les micro-organismes, ce qui conduit à une dégradation plus rapide de la matière organique.

Les moyens filtrants 18 ont une densité inférieure à celle des effluents à filtrer. La densité des effluents à filtrer dépend de la quantité de matières polluantes présentes, cette quantité étant variable selon la provenance des effluents et le ou les traitement(s) préalable(s) qu'ils ont subi.

Concernant la densité des moyens filtrants 18, plusieurs variantes sont possibles :
- selon une première variante, la densité des moyens filtrants 18 est suffisamment faible, par rapport à la densité des effluents à filtrer, pour que, lors de la circulation des effluents à filtrer, lesdits moyens filtrants flottent toujours, en présence ou en absence de gaz ;
- selon une deuxième variante, la densité des moyens filtrants 18 a une valeur plus élevée que précédemment, et intermédiaire entre la densité du mélange effluents à filtrer - gaz et la densité, plus importante, des effluents à filtrer seuls. Ainsi, lors de la circulation des effluents à filtrer, les moyens filtrants 18 ne flottent qu'en absence de gaz dans le réacteur 2.

Dans les modes de réalisation représentées sur les figures 1 à 3, le réacteur 2 est subdivisé en quatre compartiments superposés les uns aux autres, selon la direction longitudinale du réacteur, ce qui confère au réacteur une structure en étages.

Les compartiments sont séparés les uns des autres au moyen de trois parois 19a, 19b, 19c munies d'ouvertures, lesdites parois s'étendant transversalement dans le réacteur 2 sur toute la section transversale de celui-ci. Les ouvertures des parois 19a, 19b, 19c sont agencées pour retenir les moyens filtrants 18, et laisser passer les flux d'effluents à filtrer et de gaz. En particulier, les ouvertures sont réparties sur la surface des parois 19a, 19b, 19c de façon telle qu'elles assurent une bonne distribution des effluents et du gaz dans les compartiments du réacteur 2. Par exemple, les parois 19 munies d'ouvertures sont des grilles de maille adaptée.

Ces compartiments forment ainsi, dans le réacteur 2, d'une part trois étages de filtration respectivement inférieur 20a, intermédiaire 20b, et supérieur 20c, et d'autre part l'étage supérieur de sortie 17. L'étage supérieur de sortie 17 est formé entre la paroi supérieure 21 du réacteur 2 et la paroi 19c supérieure disposée en regard, et est exempt de moyens filtrants.

Selon le premier mode de réalisation, représenté sur la figure 1, l'étage de filtration inférieur 20a est situé directement au-dessus du compartiment d'entrée 10, et il en est séparé par la paroi interne 12.

Selon le deuxième mode de réalisation, représenté sur la figure 2, l'étage de filtration inférieur 20a est délimité vers le bas par la paroi inférieure 9 du réacteur 2, les ouvertures 13a d'entrée des effluents à filtrer et 13c d'entrée de gaz débouchant directement dans ledit étage de filtration inférieur 20a.

Chaque étage de filtration 20a, 20b, 20c est pourvu de ses propres moyens filtrants 18. Lors de la circulation ascendante des effluents dans le réacteur 2, les moyens filtrants 18 sont retenus en partie supérieure de l'étage de filtration considéré par la paroi 19a, 19b, 19c correspondante. A cet effet, la géométrie et la taille des ouvertures desdites parois sont adaptées à la taille et à la géométrie des moyens filtrants 18.

Chaque étage de filtration 20a, 20b, 20c comprend en outre en partie inférieure une sortie de soutirage 22a, 22b, 22c de la biomasse excédentaire, ménagée dans la paroi latérale 11 du réacteur 2. Ces sorties 22a, 22b, 22c ont pour fonction de permettre l'évacuation régulière de la biomasse excédentaire qui se forme dans chaque étage 20a, 20b, 20c au cours de la filtration, cette biomasse provenant non seulement de la croissance en continu des micro-organismes sur les supports, mais également de l'accumulation dans chaque étage des matières en suspension.

A chaque sortie de soutirage 22a, 22b, 22c est connecté un conduit de soutirage 24 muni d'une vanne 25. Un compartiment de récupération 23a, 23b, 23c de ladite biomasse excédentaire peut être prévu, ledit compartiment étant en communication avec le conduit de soutirage 24 correspondant.

Dans chaque étage de filtration 20a, 20b, 20c, la quantité et la densité des moyens filtrants 18 sont telles que, en mode soutirage de la biomasse excédentaire, la partie inférieure de chaque étage dans laquelle débouche une sortie de soutirage 22a, 22b, 22c, est exempte de moyens filtrants 18.

Pour ce faire, la quantité et la densité des moyens filtrants 18 dans chaque étage de filtration 20a, 20b, 20c sont prévues pour que lesdits moyens filtrants 18 flottent lors du soutirage de la biomasse excédentaire, tout en étant retenus dans leur étage de filtration 20a, 20b, 20c par la paroi 19a, 19b, 19c correspondante. Ainsi, lors du soutirage, il existe, en partie inférieure des étages de filtration 20a, 20b, 20c, un espace libre 31 exempt de moyens filtrants.

Cet agencement permet, à chaque étage de filtration 20a, 20b, 20c, la récupération de la biomasse excédentaire en évitant l'entraînement simultané des moyens filtrants 18 lors du soutirage qui risquerait de diminuer les capacités de filtration du réacteur 2.

En variante, les moyens filtrants 18 de l'étage supérieur 20c peuvent ne pas être situés uniquement en partie supérieure, mais répartis dans sensiblement la totalité du volume dudit étage supérieur 20c, lors du soutirage.

En outre, pour s'assurer que les moyens filtrants 18 ne sortent pas du réacteur 2 au moment du soutirage, on peut prévoir des moyens de retenue tels que des parois 19d, 19e, 19f, munies d'ouvertures, par exemple des grilles, disposées dans les conduits de soutirage 24, au voisinage d'une ou de toutes les sorties de soutirage 22a, 22b, 22c. Les ouvertures des parois 19d, 19e, 19f ou la maille des grilles sont telles qu'elles retiennent les moyens filtrants 18 dans chaque étage de filtration 20a, 20b, 20c, et laissent passer la biomasse excédentaire.

Selon un mode de réalisation, au moins un étage de filtration 20a, 20b, 20c est pourvu d'un moyen de détection 26 de la quantité de biomasse excédentaire. La détection se fait par exemple par l'émission d'un faisceau d'onde (infrarouge ou autre) et la réception de celui-ci à travers le milieu considéré. Un tel moyen de détection 26 peut être conforme à celui décrit dans la demande de brevet FR-A-2 731 272. Le moyen de détection 26 est destiné, lorsque le filtre 1 est en fonctionnement, à détecter l'accumulation de biomasse et le dépassement d'un seuil prédéfini au-delà duquel l'arrêt momentané du filtre 1 est déclenché. L'arrêt du filtre est effectué par la fermeture des vannes 5 et 8, et l'ouverture de la sortie de soutirage 22a, 22b ou 22c de l'étage concerné, par ouverture de la vanne 25 correspondante.

Selon une réalisation possible, au moins deux étages de filtration 20a, 20b, 20c comprennent des moyens filtrants 18 différents, de par la nature de leur support et/ou de la biomasse fixée.

On peut également prévoir que les moyens filtrants 18 d'au moins deux étages de filtration 20a, 20b, 20c diffèrent par leur densité, de sorte à adapter de façon optimale la densité des moyens filtrants à la quantité de matières polluantes présente dans chaque étage, cette quantité de matières polluantes influant sur la densité des effluents à filtrer, et faire ainsi en sorte que lesdits moyens filtrants flottent lors du soutirage. En particulier, on peut choisir, pour au moins deux étages de filtration, des moyens filtrants 18 dont la densité correspond respectivement à l'une et à l'autre des deux variantes exposées plus haut. Par exemple, on peut utiliser des supports comprenant des billes de densité comprise entre 0,5 et 1, et notamment de l'ordre de 0,7.

Dans chaque étage de filtration 20a, 20b, 20c sont traités des effluents ayant des propriétés différentes. En effet, les effluents, qui passent par les étages de filtration successifs, sont de moins en moins pollués au fur et à mesure de leur circulation ascendante. Et, de par la structure en étages du réacteur 2, il est ainsi possible d'optimiser le traitement des effluents dans chacun des étages de filtration 20a, 20b, 20c, en sélectionnant les moyens filtrants 18 les mieux adaptés au degré de pollution des effluents considérés, en termes de nature du support, de biomasse ou encore de densité des moyens filtrants 18.

Les supports utilisés pour les moyens filtrants 18 peuvent être formés de billes, dont le diamètre est compris entre 1 et 30 mm, et notamment entre 4 et 10 mm. On peut utiliser des billes de diamètres différents dans les différents étages de filtration. Ces billes peuvent être formées de matières plastiques ou minérales expansées, telles que du verre expansé, de l'argile expansée, ou du polystyrène expansé. Ces supports présentent l'avantage, de par leur géométrie et le matériau dont ils sont constitués, d'offrir une surface d'échange importante avec les effluents à filtrer.

En outre, le filtre 1 peut comprendre des moyens de recirculation 27 des effluents filtrés, comportant un conduit 28 associé à une pompe 29, lesdits moyens étant prévus entre la sortie 14 et l'entrée 3 des effluents. Les moyens 27 sont agencés pour récupérer au moins une partie des effluents filtrés en sortie du réacteur 2, et renvoyer cette partie à l'entrée 3 du réacteur 2 pour traitement supplémentaire.

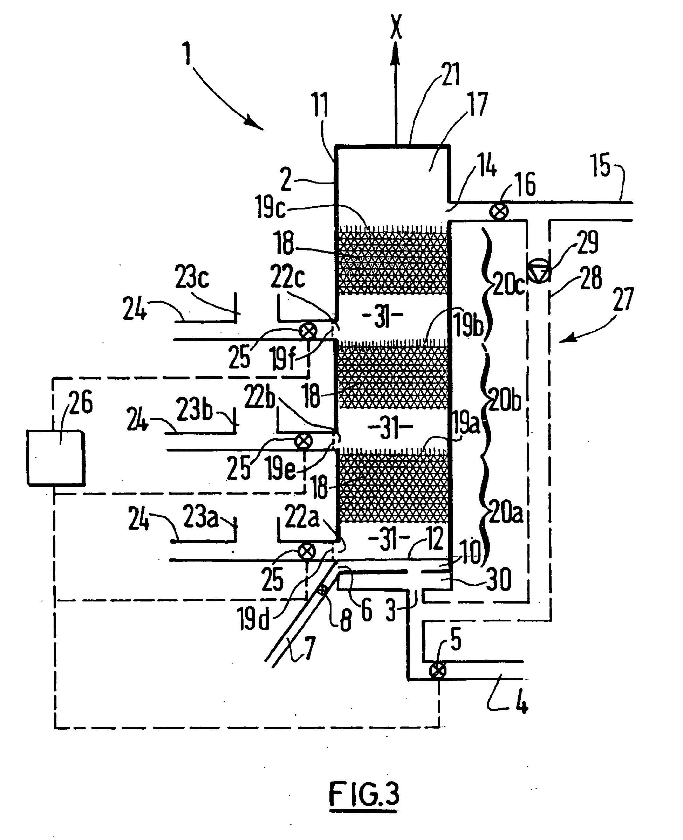

Selon un troisième mode de réalisation, représenté sur la figure 3, les moyens de recirculation 27 sont agencés pour conduire au moins une partie des effluents filtrés, et par conséquent nitrifiés, vers un étage particulier de dénitrification 30, situé en partie inférieure du réacteur 2. L'étage de dénitrification 30 devant être une zone anoxique, il est alors prévu que l'entrée 6 de gaz oxygéné soit située non plus au même niveau que l'entrée 3 des effluents à filtrer, mais au-dessus dudit étage de dénitrification 30, et par conséquent au-dessus de l'entrée 3 des effluents à filtrer.

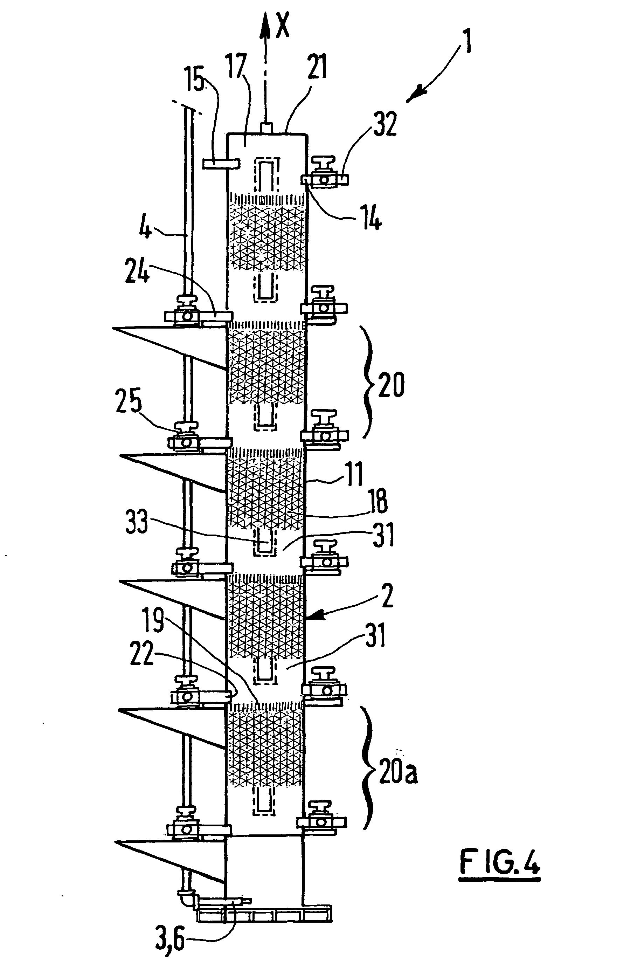

On se rapporte à présent à la figure 4, qui illustre un filtre 1 selon un quatrième mode de réalisation de l'invention.

Le filtre 1 comprend cinq étages de filtration 20. L'entrée 3 d'effluents à filtrer et l'entrée 6 de gaz oxygéné sont prévues sur la paroi latérale 11 du réacteur 2, et débouchent sous l'étage inférieur de filtration 20a. Le conduit d'alimentation 4 des effluents à filtrer s'étend sensiblement horizontalement depuis l'entrée 3, puis forme un coude et s'étend sensiblement verticalement le long de la paroi latérale 11. Cet agencement permet, notamment en cas de panne du filtre 1, ou en cas de nécessité de changement de pompe d'alimentation, d'éviter que les effluents présents dans le réacteur 2 ne s'écoulent par gravité, de façon non souhaitée, à travers le conduit 4.

En outre, il peut être prévu à un ou plusieurs étages un conduit 32 débouchant dans l'espace libre 31 depuis la paroi latérale 11 du réacteur, par exemple sensiblement à l'opposé de la sortie de soutirage de la biomasse excédentaire. Le conduit 32 est relié à un outil de contrôle, destiné par exemple à contrôler la valeur du pH des effluents présents dans l'étage de filtration considéré.

Une fenêtre 33 peut être ménagée sur la paroi latérale 11 du réacteur 2, à chaque étage de filtration 20. Cette fenêtre 33 permet notamment l'émission et la réception du faisceau d'onde du moyen de détection 26.

A titre d'exemple, les caractéristiques du filtre 1 représenté sur la figure 4 peuvent être les suivantes (filtre utilisé dans une station d'épuration, pour le traitement des effluents usés à dominante domestique ayant subi un traitement préalable par décantation primaire) :
- hauteur totale du réacteur : 3,33 m ;
- hauteur d'un étage de filtration : 0,56 m ;
- hauteur occupée par les moyens filtrants dans un étage : 0,36 m ;
- nature des moyens filtrants : billes d'argile expansée ;
- diamètre des billes : entre 4 et 10 mm ;
- masse volumique des billes : 0,7 kg/m³ ;
- pour une surface d'un étage de filtration de 1 m² (le diamètre d'un étage, dans le cas d'un filtre cylindrique, pouvant être de 3 à 4 m, voire davantage) :
   - débit des effluents à filtrer : 140 I/h ;
   - débit du gaz oxygéné : 1220 I/h ;
- nature du gaz oxygéné utilisé : 80% N₂ + 20% O₂.

Les caractéristiques des effluents en entrée de la station (décrite ci-après) et de ce filtre, et en sortie du filtre sont les suivantes :
- DCO à l'entrée de la station : 800 mg/l ;
- DCO à l'entrée du filtre : 560 mg/l ;
- charge hydraulique à l'entrée du filtre : 0,6 m³ / m².H ;
- en sortie du filtre (sans étape de dénitrification) :
   - DCO ≤ 125 mg/l ;
   - DBO₅ ≤ 25 mg/l ;
   - matières en suspension ≤ 30 mg/l ;
   - N-NTK ≤ 10 mg/l

Le filtre 1 de la figure 4 peut être adapté à l'une des configurations des figures 1 à 3 (peuvent être ou non prévus : un compartiment d'entrée 10, une pluralité d'ouvertures 13a, 13c reliées à des conduits 13b, 13d, un étage de dénitrification 30, des moyens de recirculation 27, etc.).

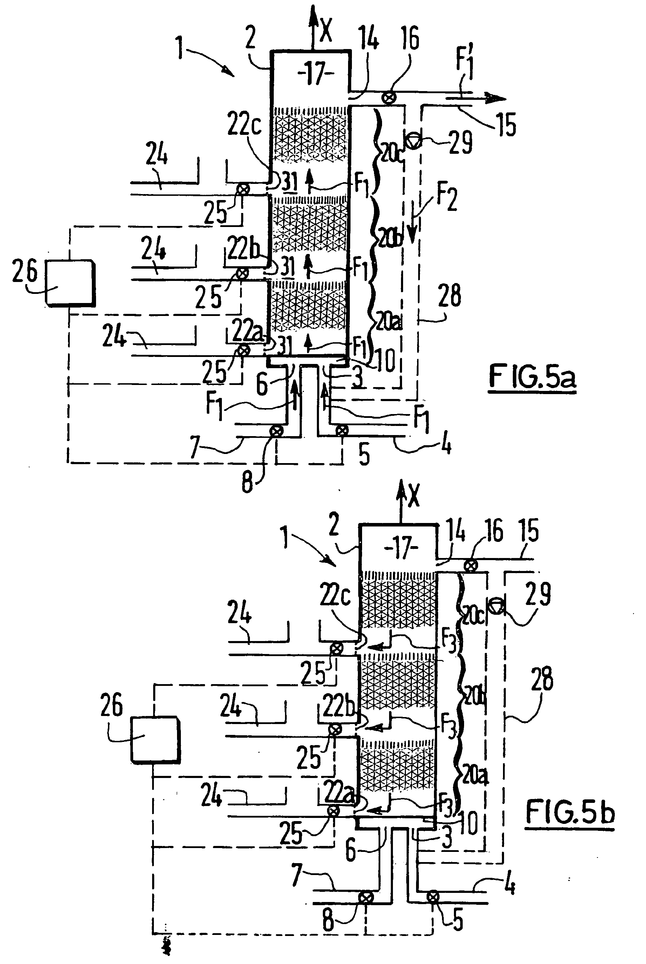

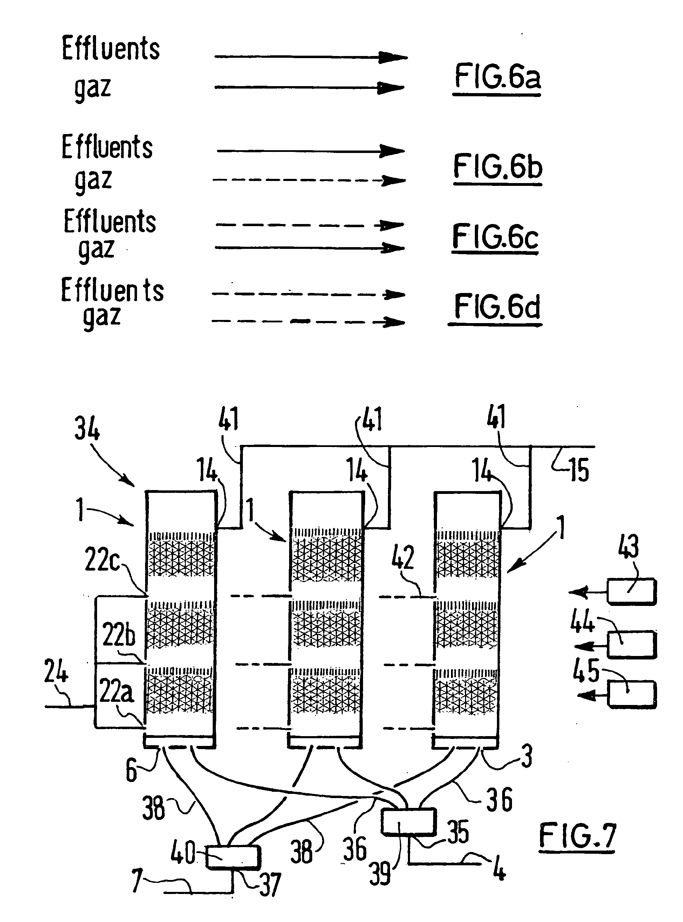

On décrit à présent le procédé de filtration biologique d'effluents utilisant un filtre selon l'invention, en relation avec les figures 5a, 5b et 6a à 6d.

On s'intéresse tout d'abord à la phase de filtration (figure 5a).

Tout d'abord, on ouvre les vannes 5, 8, ce qui conduit à l'envoi dans le réacteur 2 d'une part d'un flux d'effluents à filtrer, par l'entrée 3, et d'autre part d'un flux de gaz oxygéné, par l'entrée 6. Les effluents et le gaz circulent donc de façon ascendante, dans le sens des flèches F1 de la figure 5a.

Plusieurs possibilités sont envisageables, en ce qui concerne l'envoi des flux d'effluents à filtrer et de gaz oxygéné, comme représenté de façon schématique sur les figures 6a à 6d :
- selon une première variante (figure 6a), les alimentations en effluents à filtrer et en gaz oxygéné sont réalisées de façon continue (représentation en traits pleins) ;
- selon une deuxième variante (figure 6b), l'alimentation en effluents est continue et l'alimentation en gaz discontinue (représentation en pointillés) ;
- selon une troisième variante (figure 6c), l'alimentation en effluents est discontinue et l'alimentation en gaz continue ;
- selon une quatrième variante (figure 6d), les alimentations en effluents et en gaz sont discontinues, et simultanées ou non.

Dans le cas d'une alimentation discontinue en effluents, on peut prévoir de régler cette alimentation de sorte que le réacteur 2 ne reçoive un certain volume d'effluents à filtrer que lorsque le volume précédent l'a bien été. Cela permet d'obtenir une meilleure répartition des effluents dans le réacteur, ainsi qu'une meilleure épuration.

Les effluents introduits dans le réacteur 2 sont filtrés successivement par circulation ascendante dans les étages de filtration successifs 20a, 20b, 20c.

Lorsque les effluents débouchent dans l'étage supérieur 17, ils sont évacués par la sortie 14 et le conduit d'évacuation 15 (flèche F'1).

Le cas échéant, au moins une partie de ces effluents filtrés peut être à nouveau acheminée vers le réacteur 2, via le conduit de recirculation 28 (flèche F2). Ces effluents subissent ainsi une filtration supplémentaire qui permet d'améliorer le degré de traitement. Dans le cas du filtre représenté sur la figure 3, les effluents en recirculation passent par l'étage de dénitrification 30, où ils subissent une étape de dénitrification, en zone anoxique.

En variante, il peut être prévu de fermer périodiquement l'entrée 3 des effluents à filtrer et l'entrée 6 de gaz oxygéné, par action sur les vannes 5 et 8, et ce jusqu'à formation d'une zone anoxique permettant le développement de micro-organismes dénitrifiants, grâce auxquels les effluents présents dans le réacteur 2 peuvent subir le processus de dénitrification.

Dans le cas où le gaz oxygéné comprend de l'air additionné de gaz à oxyder, le procédé prévoit de mélanger des gaz extérieurs avec de l'air envoyé dans le réacteur 2, de sorte à permettre l'oxydation desdits gaz. En effet, lorsque des gaz malodorants sont produits par d'autres réacteurs inclus dans la station d'épuration dans laquelle se trouve le filtre 1, l'oxydation de ces gaz par passage à travers le réacteur 2 permet de les désodoriser.

On s'intéresse à présent à la phase de lavage (figure 5b), consistant à récupérer la biomasse excédentaire qui se forme au fur et à mesure de la filtration.

Lors de cette phase, on ferme l'entrée 3 des effluents à filtrer et l'entrée 6 de gaz oxygéné, par action sur les vannes 5 et 8, et on ouvre la sortie de soutirage 22a, 22b, 22c de l'étage de filtration 20a, 20b, 20c à laver, par ouverture de la vanne 25 correspondante.

Ces manoeuvres permettent, par différence de pression entre le haut du réacteur 2 et la sortie de soutirage 22a, 22b, 22c concernée, d'entraîner la biomasse excédentaire par vidange d'une partie des effluents contenus dans l'étage de filtration 20a, 20b, 20c concerné, et d'une partie des effluents situés dans les étages supérieurs (selon les flèches F3).

En effet, le flux descendant d'effluents permet de nettoyer les moyens filtrants 18, la biomasse excédentaire se décrochant des supports sur lesquels elle était fixée, et entraînant en même temps les matières en suspension retenues dans l'étage 20a, 20b, 20c à laver. Il est à préciser qu'un tel lavage n'affecte pas le potentiel épuratoire du filtre 1, la biomasse active demeurant présente dans les pores des supports.

Lors de ce procédé, deux cas de figure peuvent se présenter :
- soit la densité des moyens filtrants 18 est suffisamment faible pour que ceux-ci flottent en permanence, en présence ou en absence de gaz dans le réacteur 2 (première variante). Dans ce cas, l'espace libre 31 exempt de moyens filtrants est présent aussi bien pendant la phase de filtration que pendant la phase de lavage, et ce au moins dans les étages de filtration inférieur 20a et intermédiaire 20b ;
- soit la densité des moyens filtrants 18 est intermédiaire, et telle qu'ils ne flottent qu'en absence de gaz dans le réacteur 2 (deuxième variante). Dans ce cas, l'espace libre 31 exempt de moyens filtrants ne se forme, au moins dans les étages de filtration inférieur 20a et intermédiaire 20b, que lorsque l'alimentation en gaz est coupée. Le mouvement des moyens filtrants 18 vers le haut, provoqué par l'arrêt de l'alimentation en gaz, contribue à débarrasser les supports de leurs micro-organismes excédentaires, ce qui améliore d'autant l'efficacité du lavage de l'étage concerné.

L'étage de filtration 20a, 20b, 20c à laver est sélectionné en fonction de la quantité de biomasse qui s'y trouve, telle que détectée par le moyen de détection 26.

Il est ainsi possible de laver séparément chaque étage de filtration 20a, 20b, 20c lorsque l'un d'eux tend à se colmater (perméabilité trop réduite), ou bien la totalité des étages de filtration de façon simultanée si cela s'avère nécessaire.

Lors de la phase de lavage, la pression appliquée à chaque étage de filtration 20a, 20b, 20c est d'autant plus importante que l'étage est éloigné du haut du réacteur 2. Ainsi, les étages inférieurs, dans lesquels les moyens filtrants 18 ont tendance à se colmater plus facilement, sont lavés par une quantité d'effluents descendants plus importante que les étages supérieurs.

Selon une réalisation, la phase de lavage peut être déclenchée lorsque le moyen de détection 26 détecte une quantité de biomasse supérieure au seuil prédéfini, dans au moins un étage de filtration.

On se réfère maintenant à la figure 7 illustrant une installation de filtration 34 comprenant une pluralité de filtres 1 disposés de sorte à fonctionner en parallèle.

Dans la réalisation représentée, l'installation 34 comprend trois filtres 1 identiques, du type de celui représenté sur la figure 1. Toutefois, l'installation 34 pourrait comporter davantage ou moins de filtres. Les filtres pourraient être différents les uns des autres, et correspondre à l'une quelconque des réalisations représentées sur les figures 1 à 4.

L'installation 34 comprend :
- une entrée 35 des effluents à filtrer, reliée en amont au conduit d'alimentation 4 général et en aval à trois conduits 36, chaque conduit 36 étant connecté à l'entrée 3 des effluents à filtrer d'un filtre 1 ;
- une entrée 37 de gaz oxygéné, reliée en amont au conduit d'alimentation 7 général et en aval à trois conduits 38, chaque conduit 38 étant connecté à l'entrée 6 de gaz oxygéné d'un filtre 1.

Des moyens de coupure 39 de l'alimentation en effluents à filtrer sont prévus entre le conduit 4 et les conduits 36, de sorte à permettre la fermeture de l'alimentation en effluents de tout ou partie des filtres 1. De façon similaire, des moyens de coupure 40 de l'alimentation en gaz oxygéné sont prévus entre le conduit 7 et les conduits 38, de sorte à permettre la fermeture de l'alimentation en gaz de tout ou partie des filtres 1.

Les sorties 14 des effluents filtrés de chaque filtre 2 sont chacune reliées à un conduit 41, les trois conduits 41 étant connectés au conduit d'évacuation 15 des effluents filtrés. En outre, les sorties de soutirage 22a, 22b, 22c de chaque filtre 1 sont reliées à des conduits 42, les différents conduits 42 étant connectés à un conduit de soutirage 24.

L'installation comprend également des moyens de commande respectivement de la filtration 43, de l'arrêt du filtre 44, et de la récupération de la biomasse excédentaire 45.

Ainsi, par actionnement des différents moyens 39, 40 et 43, 44, 45, il est possible de permettre simultanément la filtration des effluents à filtrer par un nombre minimal de filtres, et l'arrêt des autres filtres en vue de la récupération de la biomasse excédentaire et/ou de la dénitrification d'au moins une partie des effluents. Il est donc possible, grâce à une telle installation 34, de gérer de façon optimale les arrêts liés à la récupération de la biomasse excédentaire ou à la mise en oeuvre du processus de dénitrification.

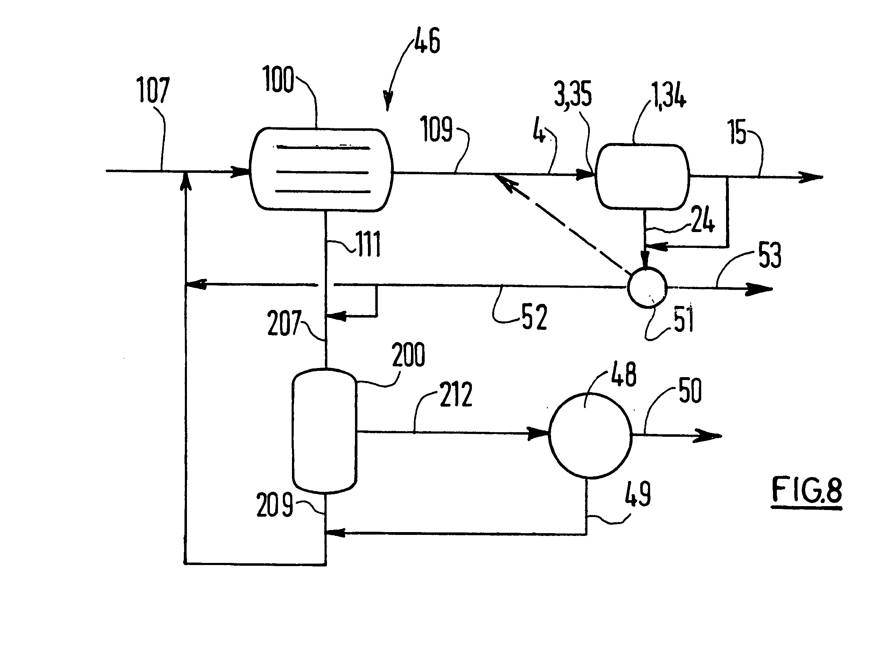

On décrit à présent, en référence à la figure 8, une station d'épuration 46 des effluents usés.

Les effluents bruts sont amenés via un conduit d'alimentation 107 en entrée d'un décanteur primaire 100, de sorte à être débarrassés d'une part importante de leurs matières en suspension.

Le décanteur primaire 100 comporte un conduit d'évacuation 109 des effluents décantés connecté à l'entrée 3 des effluents à filtrer du filtre 1, respectivement à l'entrée 35 des effluents à filtrer de l'installation de filtration 34, via le conduit d'alimentation 4, et des moyens d'évacuation des boues issues de la décantation.

Les boues issues de la décantation primaire sont évacuées vers un digesteur anaérobie de boues 200, de sorte à permettre la dégradation des boues, par des moyens d'évacuation, tels qu'un conduit d'évacuation 111, connectés au conduit d'alimentation 207 en boues fraîches du digesteur 200.

Le digesteur 200 comprend une sortie d'évacuation des effluents, connectée, via un conduit d'évacuation 209, à l'entrée d'alimentation en effluents à décanter du décanteur primaire 100.

Le digesteur 200 comprend en outre une sortie d'évacuation des boues digérées connectée, via un conduit d'évacuation 212, à l'entrée d'un épaississeur 48.

L'épaississeur 48 comporte une sortie 49 de l'eau résiduelle connectée à l'entrée d'alimentation en effluents à décanter du décanteur primaire 100, éventuellement via le conduit d'évacuation 209 des effluents du digesteur 200.

L'épaississeur 48 comporte également une sortie 50 des boues épaissies. Ces boues peuvent subir un conditionnement et un traitement appropriés en vue de leur utilisation, notamment pour l'amendement des sols. Elles peuvent également être dirigées vers une décharge ou une unité d'incinération.

Les effluents filtrés par le filtre 1, ou l'installation de filtration 34, sont évacués par un conduit d'évacuation 15. Dans le cas où le filtre 1 est apte à retenir les matières en suspension contenues dans les effluents à filtrer, les effluents filtrés sont rejetés directement. Dans le cas inverse, les effluents filtrés sont dirigés vers l'entrée d'un décanteur secondaire 51.

Le filtre 1 comprend également des sorties de soutirage permettant l'évacuation de la biomasse par des conduits de soutirage 24, ceux-ci pouvant être connectés soit à l'entrée du décanteur secondaire 51, soit, lorsque la station ne comprend pas de décanteur secondaire, à l'entrée d'alimentation en effluents à décanter du décanteur primaire 100 ou à l'entrée d'alimentation en boues fraîches du digesteur 200.

Le décanteur secondaire 51 comporte des moyens d'évacuation des boues issues de la décantation, connectés soit à l'entrée d'alimentation en effluents à décanter du décanteur primaire 100, via un conduit d'évacuation 52, débouchant éventuellement dans le conduit 209, soit à l'entrée d'alimentation en boues fraîches du digesteur 200. Une partie de ces boues peut également être renvoyée en tête du filtre 1 pour en maintenir la biomasse à un niveau désiré.

En outre, le décanteur secondaire 51 comporte un conduit d'évacuation 53 des effluents décantés.

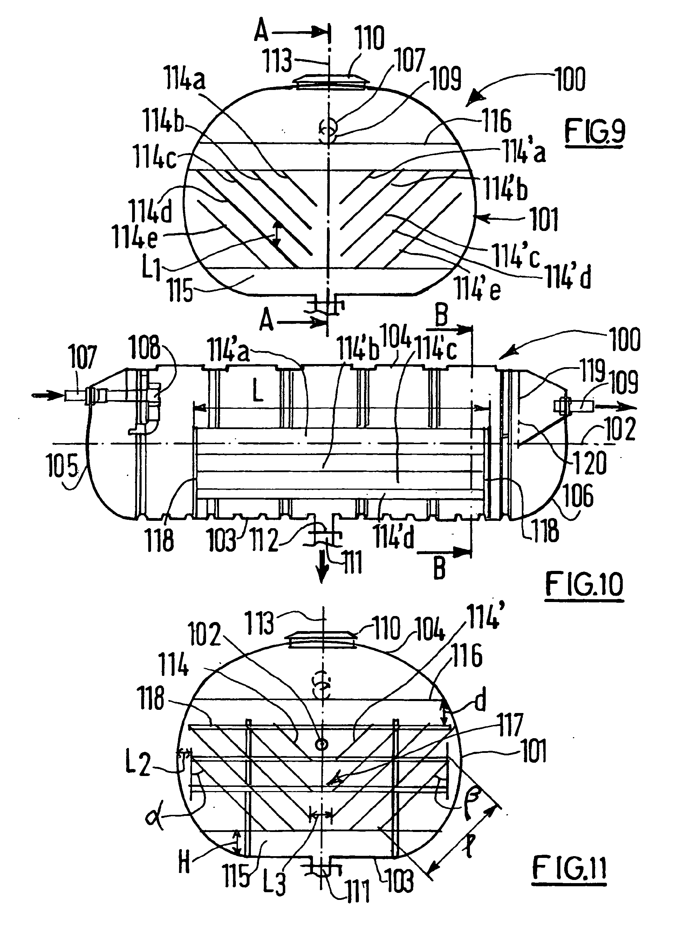

Dans une réalisation possible, représentée sur les figures 9 à 11, le décanteur primaire 100 et/ou le décanteur secondaire 51 comprend, selon une définition générale :
- une cuve 101 ayant un fond 103 et présentant, par rapport au sens de l'écoulement des effluents, une partie amont dans laquelle débouche un conduit d'alimentation 107 en effluents usés et une partie aval dans laquelle débouche le conduit d'évacuation 109 des effluents décantés ;
- une surface de décantation disposée dans la cuve 101, formée par la face supérieure d'au moins un panneau 114, 114' de décantation, ledit panneau présentant un plan moyen sensiblement parallèle au sens d'écoulement des effluents et incliné, dans un plan transversal à l'écoulement des effluents, et par rapport à la projection orthogonale de la verticale dans ledit plan transversal, d'un angle (α, β).

Un premier ensemble d'au moins un panneau de décantation est incliné selon un premier angle (α) compris entre 15° et 60°, et au moins un deuxième ensemble d'au moins un panneau de décantation est incliné selon un deuxième angle (β) compris entre 15° et 60°, les angles (α, β), l'état de surface et le coefficient de frottement des panneaux étant choisis de sorte que, lors de l'écoulement des effluents dans la cuve, les boues se déposent sur la surface de décantation puis glissent vers le fond de la cuve, au moins un passage d'évacuation 117 des boues étant prévu entre les panneaux des deux ensembles, de sorte à permettre aux boues collectées sur les faces supérieures des panneaux de tomber par gravité sur le fond 103 de la cuve 101.

La cuve 101 est sensiblement cylindrique, enterrée de sorte que l'axe 102 soit horizontal, et fermée à l'exception de quatre ouvertures :
- une ouverture d'entrée des effluents à décanter, ménagée dans la paroi d'extrémité amont 105, le conduit d'alimentation 107 se prolongeant à l'intérieur de la cuve par un coude 108 ouvert vers l'amont ;
- une ouverture d'évacuation des effluents décantés, ménagée dans la paroi d'extrémité aval 106, une paroi siphoïque 119 munie d'une ouverture 120 étant prévue pour retenir les matières flottantes à l'intérieur de la cuve ;
- une trappe de visite 110, dans la paroi supérieure 104 ;
- éventuellement, un orifice d'évacuation des boues issues de la décantation, connecté à un conduit d'évacuation 111, des moyens de coupure 112 étant prévus. En variante, les moyens d'évacuation peuvent comporter des pompes refoulantes immergées dans la cuve 101 ou des tuyaux aspirants remontant au-dessus de la cuve 101 et reliés à une pompe aspirante.

La cuve comporte deux ensembles de panneaux, disposés symétriquement par rapport au plan 113, vertical, longitudinal et médian de la cuve.

Le premier ensemble (à gauche) comprend cinq panneaux 114a à 114e sensiblement parallèles, superposés verticalement, et écartés les uns des autres d'une distance sensiblement constante L1 de l'ordre de 30 cm. Les panneaux 114a à 114e sont inclinés de haut en bas depuis la paroi latérale sensiblement verticale de la cuve vers le plan vertical 113, d'un angle α de l'ordre de 45°.

Les panneaux 114 présentent des largeurs I différentes selon leur distance par rapport au fond 103 de la cuve, mais des longueurs L (parallèlement à l'écoulement des effluents) sensiblement égales. Les panneaux 114 sont écartés de la paroi latérale verticale de la cuve 101 d'une distance horizontale L2 de l'ordre de 10 cm, pour le passage des matières en suspension, et du fond 103 d'une hauteur verticale H voisine de 30 cm, pour ménager un espace 115 d'accumulation des boues issues de la décantation. Enfin, l'extrémité supérieure des panneaux est située à une distance d au-dessous du niveau 116 des effluents à l'intérieur de la cuve.

Le deuxième ensemble (à droite) est symétrique du premier par rapport au plan vertical 113, et comprend cinq panneaux 114'a à 114'e. L'écartement horizontal L3 entre les premier et deuxième ensembles de panneaux est voisin de 30 cm, de sorte à ménager un espace 117 permettant aux boues collectées sur les panneaux de tomber vers le fond en étant dirigées et recueillies en zone centrale du fond 103 de la cuve 101.

Des moyens 118 de support et de fixation des panneaux 114, 114' à la cuve 101 sont disposés au voisinage des extrémités amont et aval desdits panneaux.

Selon une réalisation possible, le décanteur 100 comprend, par rapport au sens de l'écoulement des effluents, au moins une première et une deuxième série de panneaux 114, 114', la deuxième série étant située en aval de la première série, lesdites séries comportant chacune au moins un premier et un deuxième ensembles d'au moins un panneau, de sorte à améliorer encore l'extraction des boues.

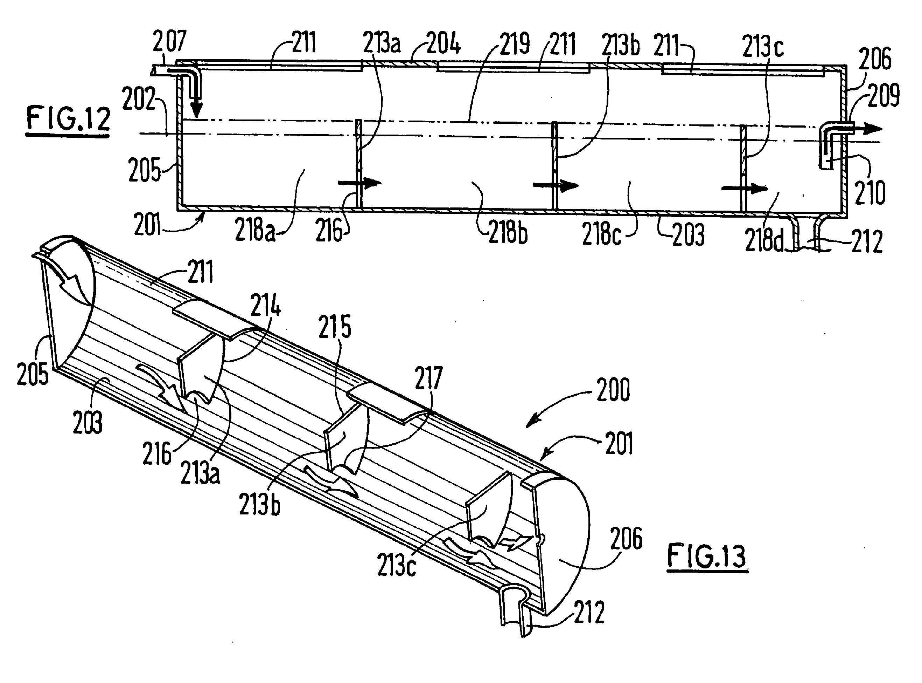

Dans une réalisation possible, représentée sur les figures 12 et 13, le digesteur 200 comprend, selon une définition générale, une cuve 201 ayant un fond 203 sensiblement horizontal, un conduit d'alimentation 207 de la cuve en boues fraîches, un conduit d'évacuation 209 des effluents hors de la cuve, et des moyens d'évacuation 212 des boues digérées hors de la cuve, ladite cuve comportant au moins une paroi 213a, 213b, 213c transversale à l'écoulement des effluents, la paroi définissant un compartiment amont 218a, 218b, 218c et un compartiment aval 218b, 218c, 218d, de sorte que la cuve présente un premier compartiment amont 218a, dans lequel débouche le conduit d'alimentation 207 en boues fraîches, et un dernier compartiment aval 218d, dans lequel débouche le conduit d'évacuation 209 des effluents La paroi 213a, 213b, 213c présente, à sa partie inférieure, une ouverture de communication 216 du compartiment amont au compartiment aval, de sorte à permettre le passage des boues et la circulation des effluents, au-dessus et à travers la couche de boues maintenue au fond de la cuve, de façon sensiblement horizontale du premier compartiment amont 218a au dernier compartiment aval 218d.

La cuve 201, sensiblement cylindrique ou section verticale sensiblement rectangulaire, positionnée de sorte que son axe 202 soit horizontal, est fermée, à l'exception des ouvertures suivantes :
- une ouverture d'entrée, ménagée dans la paroi amont 205, reliée au conduit d'alimentation 207 en boues fraîches qui forme un coude 208 ;
- une ouverture d'évacuation des effluents, ménagée dans la paroi aval 206, reliée au conduit d'évacuation 209 formant une prise siphoïque 210 ;
- un orifice d'évacuation des boues digérées, dans le fond 203, connecté à un conduit d'évacuation 212 ;
- une trappe de visite 211 prévue dans la paroi supérieure 204.

Le digesteur 200 comporte trois parois transversales respectivement amont 213a, intermédiaire 213b, et aval 213c, présentant un contour annulaire 214 épousant la forme intérieure de la cuve 201 et un bord supérieur 215 horizontal. La hauteur des parois est inférieure au diamètre de la cuve, et par exemple de l'ordre de 30 cm. Dans la partie inférieure de chaque paroi 213a, b, c est ménagée une ouverture de communication 216 présentant un bord supérieur 217 annulaire.

La cuve 201 est ainsi divisée longitudinalement en quatre compartiments 218a, 218b, 218c, 218d. Les parois permettent de retenir dans chaque compartiment les boues formées par agglomération des matières en suspension, tandis que les matières flottantes en excès peuvent passer par débordement d'un compartiment amont à un compartiment aval, voire l'inverse.

Les boues fraîches introduites dans le digesteur 200 ont une concentration en matière sèche inférieure à 25 g/l. Elles se déposent sur le fond de la cuve, sous forme d'une couche de faible épaisseur, par exemple inférieure à 0,5 m. Il est maintenu dans la cuve 201 un niveau 219 d'effluents. Les boues sont progressivement dégradées et liquéfiées. Elles passent alors dans les compartiments successifs par les ouvertures de communication 216. Les effluents s'écoulent parallèlement à l'axe 202, emportant avec eux les produits solubles issus de la digestion des boues.

## Revendications

1. Filtre pour le traitement des effluents usés par voie biologique, ledit filtre (1) étant destiné à la rétention des matières en suspension et à la transformation biologique des impuretés organiques contenues dans les effluents à filtrer, ledit filtre (1) comprenant un réacteur (2) dans lequel le flux d'effluents à filtrer est prévu pour circuler de bas en haut, ledit réacteur (2) comprenant :
- en partie basse, une entrée (3) des effluents à filtrer et une entrée (6) de gaz oxygéné ;
- et, en partie haute, une sortie (14) des effluents filtrés ;
- des moyens filtrants (18) comprenant des couches de particules d'un matériau solide formant supports et une biomasse accrochée sur la surface desdits supports, lesdits moyens filtrants (18) ayant une densité inférieure à la densité des effluents à filtrer et étant interposés entre l'entrée (3) des effluents à filtrer et la sortie (14) des effluents filtrés ;
**caractérisé en ce que** le réacteur (2) est subdivisé en au moins trois compartiments superposés formant étages au moyen d'au moins deux parois (19a, 19b, 19c) munies d'ouvertures, lesdites ouvertures étant agencées pour retenir les moyens filtrants (18), de sorte à former dans le réacteur (2) :
- au moins deux étages de filtration (20a, 20b, 20c) ;
- et un étage supérieur de sortie (17), la sortie (14) des effluents filtrés débouchant dans l'étage supérieur de sortie (17) ;
chaque étage de filtration (20a, 20b, 20c) étant pourvu d'une couche de ses propres moyens filtrants (18), et comprenant, en partie inférieure, une sortie de soutirage (22a, 22b, 22c) de la biomasse excédentaire, la quantité et la densité des moyens filtrants (18) dans chaque étage de filtration (20a, 20b, 20c) étant telles que, en mode soutirage, la partie inférieure d'au moins le ou les étages inférieurs (20a, 20b) dans laquelle débouche la sortie de soutirage (22a, 22b) est exempte de moyens filtrants, de manière à permettre la récupération de la biomasse excédentaire.

2. Filtre selon la revendication 1, **caractérisé en ce que** l'étage supérieur de sortie (17) est exempt de moyens filtrants (18), ledit étage (17) étant formé entre la paroi supérieure (21) du réacteur (2) et la paroi (19c) disposée en regard.

3. Filtre selon la revendication 1 ou 2, **caractérisé en ce qu**'il comprend un compartiment d'entrée (10) des effluents à filtrer et du gaz oxygéné, ledit compartiment (10) étant formé entre la paroi inférieure (9) du réacteur (2) et une paroi interne (12) perméable aux effluents à filtrer et au gaz oxygéné.

4. Filtre selon la revendication 1 ou 2, **caractérisé en ce que** le réacteur (2) comprend une pluralité d'ouvertures (13a, 13c) formant respectivement entrée (3) des effluents à filtrer et entrée (6) de gaz oxygéné, lesdites ouvertures étant ménagées dans la paroi inférieure (9) du réacteur (2).

5. Filtre selon l'une quelconque des revendications 1 à 4, **caractérisé en ce que** les parois (19a, 19b, 19c) munies d'ouvertures sont des grilles.

6. Filtre selon l'une quelconque des revendications 1 à 5, **caractérisé en ce qu**'au moins une sortie de soutirage (22a, 22b, 22c) comprend une paroi (19d, 19e, 19f) munie d'ouvertures, formant moyen de retenue des moyens filtrants (18).

7. Filtre selon l'une quelconque des revendications 1 à 6, **caractérisé en ce qu'**au moins un étage de filtration (20a, 20b, 20c) est pourvu d'un moyen de détection (26) de la quantité de biomasse excédentaire.

8. Filtre selon la revendication 7, **caractérisé en ce que** le moyen de détection (26) de la quantité de biomasse excédentaire comprend un moyen d'émission et de réception d'un faisceau d'onde.

9. Filtre selon l'une quelconque des revendications 1 à 8, **caractérisé en ce qu**'au moins deux étages de filtration (20a, 20b, 20c) comprennent des moyens filtrants (18) différents, de par la nature de leur support et/ou de la biomasse fixée.

10. Filtre selon la revendication 9, **caractérisé en ce que** les moyens filtrants (18) diffèrent par leur densité.

11. Filtre selon l'une quelconque des revendications 1 à 10, **caractérisé en ce que** les supports comprennent des billes dont la densité est comprise entre 0,5 et 1.

12. Filtre selon l'une quelconque des revendications 1 à 11, **caractérisé en ce que** les supports comprennent des billes de diamètre compris entre 1 et 30 mm.

13. Filtre selon l'une quelconque des revendications 1 à 12, **caractérisé en ce que** les supports comprennent des billes formées de matières plastiques ou minérales expansées.

14. Filtre selon l'une quelconque des revendications 1 à 13, **caractérisé en ce qu**'il comprend des moyens de recirculation (27) des effluents filtrés, prévus entre la sortie (14) et l'entrée (3) des effluents du réacteur (2), lesdits moyens (27) étant agencés pour permettre à au moins une partie des effluents filtrés d'être renvoyée dans le réacteur (2) pour traitement supplémentaire.

15. Filtre selon la revendication 14, **caractérisé en ce que** les moyens de recirculation (27) comprennent au moins un conduit de recirculation (28) associé à une pompe (29).

16. Filtre selon la revendication 14 ou 15, **caractérisé en ce que** le réacteur (2) comprend en outre un étage inférieur de dénitrification (30) des effluents issus des moyens de recirculation (27) et entrant dans le réacteur (2), l'entrée de gaz oxygéné (6) étant située au-dessus dudit étage de dénitrification (30).

17. Procédé de filtration biologique des effluents usés mettant en oeuvre un filtre (1) selon l'une quelconque des revendications précédentes, **caractérisé en ce qu**'il comporte :
(i) une phase de filtration comprenant les étapes consistant à :
- alimenter le réacteur (2) en effluents à filtrer et en gaz oxygéné, selon un courant ascendant, par l'entrée (3) des effluents à filtrer et l'entrée (6) de gaz oxygéné, respectivement ;
- faire circuler ledit gaz et lesdits effluents de façon ascendante dans les différents étages de filtration successifs (20a, 20b, 20c), de sorte à filtrer lesdits effluents ;
- récupérer les effluents filtrés par la sortie (14) du réacteur (2) ; et
(ii) une phase de lavage au cours de laquelle lesdits étages de filtration peuvent être débarrassés indépendamment les uns des autres de leur biomasse excédentaire ce qui permet de mettre en oeuvre le lavage de façon sélective.

18. Procédé selon la revendication 17, **caractérisé en ce que** l'alimentation en effluents à filtrer et/ou en gaz oxygéné est réalisée de façon continue.

19. Procédé selon la revendication 17, **caractérisé en ce que** l'alimentation en effluents à filtrer et/ou en gaz oxygéné est réalisée de façon discontinue.

20. Procédé selon l'une quelconque des revendications 17 à 19, **caractérisé en ce que** ladite phase de lavage correspond à une phase de lavage d'au moins un étage de filtration (20a, 20b, 20c), au cours de laquelle :
- on ferme l'entrée (3) des effluents à filtrer et l'entrée (6) de gaz oxygéné du réacteur (2) ;
- puis on ouvre la sortie de soutirage (22a, 22b, 22c) de l'étage à laver, de sorte à entraîner la biomasse excédentaire par vidange, par différence de pression entre le haut du réacteur (2) et ladite sortie de soutirage.

21. Procédé selon la revendication 20, **caractérisé en ce que** la phase de lavage est déclenchée par la détection, dans au moins un étage de filtration (20a, 20b, 20c), d'une quantité de biomasse supérieure à un seuil prédéfini.

22. Procédé selon la revendication 21, **caractérisé en ce que** la détection de la quantité de biomasse est réalisée par émission et réception d'un faisceau d'onde.

23. Procédé selon l'une quelconque des revendications 17 à 22, **caractérisé en ce que** le gaz oxygéné comprend de l'air additionné de gaz à oxyder.

24. Procédé selon l'une quelconque des revendications 17 à 23, **caractérisé en ce qu**'il comporte une étape de recirculation dans le réacteur (2) d'au moins une partie des effluents filtrés, de sorte à réaliser un traitement supplémentaire de ladite partie des effluents filtrés.

25. Procédé selon la revendication 24, **caractérisé en ce qu'**il comporte une étape de dénitrification de ladite partie des effluents filtrés issues de l'étape de recirculation, par circulation de ladite partie des effluents filtrés dans un étage de dénitrification (30).

26. Procédé selon l'une quelconque des revendications 17 à 25, **caractérisé en ce qu'**il comporte une étape de dénitrification d'au moins une partie des effluents filtrés, dans laquelle on ferme l'entrée (3) des effluents à filtrer et l'entrée (6) gaz oxygéné (6) du réacteur (2), de sorte à conserver les effluents dans le réacteur (2) jusqu'à formation d'une zone anoxique à l'intérieur dudit réacteur.

27. Installation de filtration, **caractérisée en ce qu**'elle comprend une pluralité de filtres (1) selon l'une quelconque des revendications 1 à 16, lesdits filtres étant disposés de sorte à fonctionner en parallèle, ladite installation (34) comprenant
- une entrée (35) des effluents à filtrer connectée à l'entrée (3) des effluents à filtrer de chacun des filtres (1) ;
- une entrée (37) de gaz oxygéné, connectée à l'entrée (6) de gaz oxygéné de chacun des filtres (1) ;
- une sortie des effluents filtrés connectée à la sortie (14) de chacun des filtres (1) ;
- au moins une sortie de soutirage connectée aux sorties de soutirage (22a, 22b, 22c) de chacun des filtres (1) ;
l'installation comprenant en outre des moyens de coupure (39) sélectifs de l'alimentation en effluents à filtrer de chacun des filtres (1), des moyens de coupure (40) sélectifs de l'alimentation en gaz oxygéné (34) de chacun des filtres (1), des moyens de commande respectivement de la filtration (43), de l'arrêt (44), et de la récupération de la biomasse excédentaire (45), de sorte à permettre simultanément la filtration des effluents à filtrer par un nombre minimal de filtres, et l'arrêt des autres filtres en vue de la récupération de la biomasse excédentaire et/ou de et la dénitrification d'au moins une partie des effluents filtrés dans lesdits autres filtres.

28. Station d'épuration d'effluents usés, **caractérisée en ce qu**'elle comprend au moins un filtre (1) selon l'une quelconque des revendications 1 à 16, ou une installation de filtration (34) selon la revendication 27, ladite station comprenant en outre un décanteur primaire (100) alimenté en effluents usés, ledit décanteur primaire (100) comportant un conduit d'évacuation (109) des effluents décantés connecté à l'entrée (3) des effluents à filtrer du filtre (1), respectivement à l'entrée (35) des effluents à filtrer de l'installation de filtration (34), et des moyens d'évacuation des boues issues de la décantation.

29. Station d'épuration selon la revendication 28, **caractérisée en ce que** le décanteur primaire (100) comprend :
- une cuve (101) ayant un fond (103) et présentant, par rapport au sens de l'écoulement des effluents, une partie amont dans laquelle débouche un conduit d'alimentation (107) en effluents usés et une partie aval dans laquelle débouche le conduit d'évacuation (109) des effluents décantés ;
- une surface de décantation disposée dans la cuve (101), formée par la face supérieure d'au moins un panneau (114, 114') de décantation, ledit panneau présentant un plan moyen sensiblement parallèle au sens d'écoulement des effluents et incliné, dans un plan transversal à l'écoulement des effluents, et par rapport à la projection orthogonale de la verticale dans ledit plan transversal, d'un angle (alpha , beta);
un premier ensemble d'au moins un panneau (114, 114a, 114b, 114c, 114d, 114e) de décantation étant incliné selon un premier angle (alpha ) compris entre 15 DEG et 60 DEG , et au moins un deuxième ensemble d'au moins un panneau (114', 114'a, 114'b, 114'c, 114'd, 114'e) de décantation étant incliné selon un deuxième angle (beta ) compris entre 15 DEG et 60 DEG , les angles (alpha , beta ), l'état de surface et le coefficient de frottement des panneaux étant choisis de sorte que, lors de l'écoulement des effluents dans la cuve, les boues se déposent sur la surface de décantation puis glissent vers le fond de la cuve, au moins un passage d'évacuation (117) des boues étant prévu entre les panneaux des deux ensembles, de sorte à permettre aux boues collectées sur les faces supérieures des panneaux de tomber par gravité sur le fond (103) de la cuve (101).

30. Station d'épuration selon la revendication 28 ou 29, **caractérisée en ce qu**'elle comprend en outre un décanteur secondaire (51) comportant :
- une entrée des effluents à décanter connectée aux sorties de soutirage (22a, 22b, 22c) du filtre (1) ;
- une sortie des effluents décantés ;
- des moyens d'évacuation des boues issues de la décantation.

31. Station d'épuration selon l'une quelconque des revendications 28 à 30, **caractérisée en ce qu**'elle comprend en outre un digesteur anaérobie de boues (200) comprenant :
- une entrée d'alimentation en boues fraîches connectée aux moyens d'évacuation des boues issues de la décantation du décanteur primaire (100) ;
- une sortie d'évacuation des effluents connectée à l'entrée d'alimentation en effluents à décanter du décanteur primaire (100) ;
- une sortie d'évacuation des boues digérées.

32. Station d'épuration selon la revendication 31, **caractérisée en ce que** le digesteur (200) comprend une cuve (201) ayant un fond (203) sensiblement horizontal, un conduit d'alimentation (207) de la cuve en boues fraîches, un conduit d'évacuation (209) des effluents hors de la cuve, et des moyens d'évacuation (212) des boues digérées hors de la cuve, ladite cuve comportant au moins une paroi (213a, 213b, 213c) transversale à l'écoulement des effluents, la paroi définissant un compartiment amont (218a, 218b, 218c) et un compartiment aval (218b, 218c, 218d), de sorte que la cuve présente un premier compartiment amont (218a), dans lequel débouche le conduit d'alimentation (207) en boues fraîches, et un dernier compartiment aval (218d), dans lequel débouche le conduit d'évacuation (209) des effluents, **caractérisé en ce que** la paroi (213a, 213b, 213c) présente, à sa partie inférieure, une ouverture de communication (216) du compartiment amont au compartiment aval, de sorte à permettre le passage des boues et la circulation des effluents, au-dessus et à travers la couche de boues maintenue au fond de la cuve, de façon sensiblement horizontale du premier compartiment amont (218a) au dernier compartiment aval (218d).

33. Station d'épuration selon la revendication 31 ou 32, **caractérisée en ce qu**'elle comprend en outre un épaississeur (48) comprenant :
- une entrée connectée à la sortie d'évacuation des boues digérées du digesteur (200) ;
- une sortie des boues épaissies ;
- une sortie de l'eau résiduelle connectée à l'entrée d'alimentation en effluents à décanter du décanteur primaire (100).

## Claims

1. Filter for the treatment of waste effluents by biological method, said filter (1) being intended for retention of suspended solids and biological transformation of organic impurities contained in effluents to be filtered, said filter (1) including a reaction vessel (2) in which the flow of effluents to be filtered will circulate from bottom to top, said reaction vessel (2) comprising:
- near the bottom, an inlet (3) for effluents to be filtered and an inlet (6) for oxygenated gas;
- and near the top, an outlet (14) for filtered effluents;
- filter means (18) including layers of particles made of a solid material forming supports and a biomass bonded to the surface of said supports, said filter means (18) having a density lower than the density of the effluents to be filtered and being inserted between the inlet (3) for effluents to be filtered and the outlet (14) for filtered effluents;
**characterised in that** the reaction vessel (2) is subdivided into at least three superposed compartments forming stages using at least two walls (19a, 19b, 19c) provided with openings, said openings being arranged to retain the filter means (18) so as to form the following in the reaction vessel (2):
- at least two filtration stages (20a, 20b, 20c);
- and an upper outlet stage (17), the outlet (14) for filtered effluents opening up into the upper outlet stage (17);
each filtration stage (20a, 20b, 20c) being provided with a layer of its own filter means (18) and near the bottom, comprising a drawing off outlet (22a, 22b, 22c) for excess biomass, the quantity and density of filter means (18) in each filtration stage (20a, 20b, 20c) being such that in drawing off mode, the lower part of at least the lower stage(s) (20a, 20b) into which the drawing off outlet (22a, 22b) opens up is free of filter means so that excess biomass can be recovered.

2. Filter set forth in claim 1, **characterised in that** the upper outlet stage (17) is free of filter means (18), said stage (17) being formed between the upper wall (21) of the reaction vessel (2) and the wall (19c) facing it.

3. Filter set forth in claim 1 or 2, **characterised in that** it includes an inlet compartment (10) for effluents to be filtered and for oxygenated gas, said compartment (10) being formed between the lower wall (9) of the reaction vessel (2) and an inner wall (12) permeable to effluents to be filtered and to oxygenated gas.

4. Filter set forth in claim 1 or 2, **characterised in that** the reaction vessel (2) comprises a plurality of openings (13a, 13c) forming the inlet (3) for effluents to be filtered and the inlet (6) for oxygenated gas, said openings being formed in the lower wall (9) of the reaction vessel (2).

5. Filter set forth in one of claims 1 to 4, **characterised in that** the walls (19a, 19b, 19c) provided with openings are gratings.

6. Filter set forth in any one of claims 1 to 5, **characterised in that** at least one drawing off outlet (22a, 22b, 22c) comprises a wall (19d, 19e, 19f) provided with openings, forming a means of retaining the filter means (18).

7. Filter set forth in any one of claims 1 to 6, **characterised in that** at least one filtration stage (20a, 20b, 20c) is provided with a means (26) of detecting the quantity of excess biomass.

8. Filter set forth in claim 7, **characterised in that** the means (26) of detecting the quantity of excess biomass includes a means of transmitting and receiving a radio beam.

9. Filter set forth in any one of claims 1 to 8, **characterised in that** at least two filtration stages (20a, 20b, 20c) comprise different filter means (18), due to the fixed nature of their support and / or the biomass.

10. Filter set forth in claim 9, **characterised in that** the filter means (18) have a different density.

11. Filter set forth in any one of claims 1 to 10, **characterised in that** the supports include balls with a density of between 0.5 and 1.

12. Filter set forth in any one of claims 1 to 11, **characterised in that** the supports include balls with a diameter of between 1 and 30 mm.

13. Filter set forth in any one of claims 1 to 12, **characterised in** the supports include balls formed of plastic or expanded mineral materials.

14. Filter set forth in any one of claims 1 to 13, **characterised in that** it includes means (27) of recirculating filtered effluents, provided between the outlet (14) and the inlet (3) of effluents into the reaction vessel (2), said means (27) being arranged to enable at least part of the filtered effluents to be returned into the reaction vessel (2) for additional treatment.

15. Filter set forth in claim 14, **characterised in that** the recirculation means (27) include at least one recirculation duct (28) associated with a pump (29).

16. Filter set forth in claim 14 or 15, **characterised in that** the reaction vessel (2) also includes a lower denitrification stage (30) for effluents output from the recirculation means (27) and entering the reaction vessel (2), the oxygenated gas inlet (6) being located above said denitrification stage (30).

17. Biological filtering method for waste effluents using a filter (1) set forth in any one of the above claims, **characterised in that** it includes:
(i) a filtration phase including steps consisting of:
- supplying the reaction vessel (2) with an upwards current of effluents to be filtered and oxygenated gas, through the inlet (3) for effluents to be filtered and the inlet (6) for oxygenated gas respectively;
- making said gas and said effluents circulate upwards through the different successive filtration stages (20a, 20b, 20c), so as to filter said effluents;
- recover filtered effluents through the outlet (14) from the reaction vessel (2); and
(ii) a washing phase during which excess biomass in said filtration stages may be removed independently of other stages, so that washing can be done selectively.

18. Method set forth in claim 17, **characterised in that** the effluents to be filtered and / or oxygenated gas are supplied continuously.

19. Method set forth in claim 17, **characterised in that** the effluents to be filtered and / or oxygenated gas are supplied discontinuously.

20. Method set forth in any one of claims 17 to 19, **characterised in that** said washing phase consists of washing at least one filtration stage (20a, 20b, 20c) during which:
- the inlet (3) for effluents to be filtered is closed and the inlet (6) for oxygenated gas from the reaction vessel (2) is closed;
- the drawing off outlet (22a, 22b, 22c) of the stage to be washed is then opened so as to entrain excess biomass by drainage, due to the pressure difference between the top of the reaction vessel (2) and said drawing off outlet.

21. Method set forth in claim 20, **characterised in that** the washing phase is triggered by detection of a quantity of biomass greater than a predefined threshold in at least one filtration stage (20a, 20b, 20c).

22. Method set forth in claim 21, **characterised in that** the quantity of biomass is detected by emission and reception of a radio beam.

23. Method set forth in any one of claims 17 to 22, **characterised in that** the oxygenated gas includes air with oxidising gas.

24. Method set forth in any one of claims 17 to 23, **characterised in that** it includes a step to recirculate at least part of the filtered effluents in the reaction vessel (2), to perform an additional treatment of said part of filtered effluents.

25. Method set forth in claim 24, **characterised in that** it includes a denitrification step of said part of filtered effluents output from the recirculation step, by recirculation of said part of filtered effluents in a denitrification stage (30).

26. Method set forth in any one of claims 17 to 25, **characterised in that** it includes a step to denitrify at least part of the filtered effluents, in which the inlet (3) for effluents to be filtered and the inlet (6) for oxygenated gas (6) into the reaction vessel (2) are closed, so as to keep effluents in the reaction vessel (2) until an anoxic zone is formed inside said reaction vessel.

27. Filtration installation, **characterised in that** it includes a plurality of filters (1) set forth in any one of claims 1 to 16, said filters being arranged so as to be able to operate in parallel, said installation (34) including:
- an inlet (35) for effluents to be filtered connected to the inlet (3) for effluents to be filtered in each filter (1) ;
- an oxygenated gas inlet (37) connected to the oxygenated gas inlet (6) of each filter (1);
- a filtered effluents outlet connected to the outlet (14) from each filter (1);
- at least one drawing off outlet connected to the drawing off outlets (22a, 22b, 22c) from each filter (1); the installation also including selective means (39) of cutting off the supply of effluents to be filtered to each filter (1), selective means (40) of cutting off the supply of oxygenated gas (34) to each filter (1), filtration control means (43), shut off control means (44), and means (45) of controlling recovery of excess biomass, so that effluents to be filtered can be filtered by a minimum number of filters at the same time that other filters are stopped in order to recover excess biomass and / or denitrification of at least part of the filtered effluents in said other filters.

28. Waste effluents treatment station, **characterised in that** it includes at least one filter (1) set forth in any one of claims 1 to 16, or a filtration installation (34) set forth in claim 27, said station also including a primary settlement tank (100) supplied with used effluents, said primary settlement tank (100) including an evacuation duct (109) to convey settled effluents connected to the inlet (3) for effluents to be filtered from the filter (1), to the inlet (35) for effluents to be filtered in the filtration installation (34), and to evacuation means of sludge output from settlement, respectively.

29. Treatment station set forth in claim 28, **characterised in that** the primary settlement tank (100) includes:
- a tank (101) with a bottom (103) and an upstream part on the effluent flow inlet side, into which a supply duct (107) carrying waste effluents leads, and a downstream part into which the settled effluents evacuation pipe (109) leads;
- a settlement surface arranged in the tank (101) formed by the upper face of at least one settlement panel (114, 114'), said panel having an average plane approximately parallel to the effluent flow direction and inclined in a plane transverse to the effluent flow, and at an angle (alpha, beta) from the orthogonal projection of the vertical into said transverse plane;
a first set of at least one settlement panel (114, 114a, 114b, 114c, 114d, 114e) being inclined at a first angle (alpha) between 15 and 60 degrees, and at least one second set of at least one settlement panel (114', 114a', 114b', 114c', 114d', 114e') inclined at a second angle (beta) between 15 and 60 degrees, the angles (alpha, beta), the surface condition and the coefficient of friction of the panels being chosen such that when effluents flow into the tank, sludge is deposited on the settlement surface and then slides towards the bottom of the tank, at least one sludge evacuation passage (117) being provided between the panels in the two assemblies, so as to enable sludge collected on the top faces of the panels to drop by gravity to the bottom (103) of the tank (101).

30. Treatment station set forth in claim 28 or 29, **characterised in that** it also includes a secondary settlement tank (51) including:
- an inlet for effluents to be settled connected to the drawing off outlets (22a, 22b, 22c) from the filter (1);
- a settled effluents output;
- means of evacuating sludge originating from settlement.

31. Treatment station set forth in any one of claims 28 to 30, **characterised in that** it also includes an anaerobic sludge digester (200) including:
- a fresh sludge supply inlet connected to the evacuation means for sludge obtained from settlement of the primary settlement tank (100);
- an effluent evacuation outlet connected to the effluent supply inlet for effluents to be settled from the primary settlement tank (100);
- a digested sludge evacuation outlet.

32. Treatment station set forth in claim 31, **characterised in that** the digester (200) includes a tank (201) with an approximately horizontal bottom (203), a fresh sludge tank supply pipe (207), an evacuation duct (209) conveying effluents outside the tank, and means (212) of evacuating digested sludge outside the tank, said tank including at least one wall (213a, 213b, 213c) transverse to the effluents flow, the wall defining an upstream side compartment (218a, 218b, 218c) and a downstream compartment (218b, 218c, 218d), such that the tank has a first upstream compartment (218a) into which the fresh sludge supply duct (207) leads, and a last downstream compartment (218d) into which the effluent evacuation duct (209) leads, **characterised in that** the lower surface of the wall (213a, 213b, 213c) has a communication opening (216) from the upstream compartment to the downstream compartment, so as to enable passage of sludge and circulation of effluents above and through the sludge layer kept in the bottom of the tank, approximately horizontally from the first upstream compartment (218a) to the last downstream compartment (218d).

33. Treatment station set forth in claim 31 or 32, **characterised in that** it also includes a thickener (48) including:
- an inlet connected to the digested sludge evacuation outlet from the digester (200);
- a thickened sludge outlet;
- a residual water outlet connected to the inlet supplying effluents to be settled from the primary settlement tank (100).

## Patentansprüche

1. Filter zur Behandlung von Abwässern auf biologischem Wege, wobei der besagte Filter (1) zur Retention der suspendierten Stoffe und biologischen Umwandlung der in den zu filtrierenden Abwässern enthaltenen organischen Unreinheiten bestimmt ist, wobei der besagte Filter (1) einen Reaktor (2) umfasst, in welchem der zu filtrierende Abwasserstrom von unten nach oben zirkuliert, wobei der besagte Reaktor (2) umfasst:
- im unteren Teil einen Eingang (3) für die zu filtrierenden Abwässer und einen Eingang (6) für oxygeniertes Gas;
- und im oberen Teil einen Ausgang (14) für die gefilterten Abwässer;
- Filtriermittel (18), die Partikelschichten eines trägerbildenden Feststoffs umfassen und eine Biomasse, die auf der Oberfläche der besagten Träger anhaftet, wobei die besagten Filtriermittel (18) eine geringere Dichte haben als die zu filtrierenden Abwässer und zwischen dem Eingang (3) für die zu filtrierenden Abwässer und dem Ausgang (14) für die gefilterten Abwässer angeordnet sind;
**dadurch gekennzeichnet, dass** der Reaktor (2) in mindestens drei übereinandergelagerte Abteile unterteilt ist, die anhand von mindestens zwei mit Öffnungen ausgestatteten Zwischenwänden (19a, 19b, 19c) Etagen bilden, wobei die besagten Öffnungen derart angeordnet sind, dass sie die Filtriermittel (18) zurückhalten, so dass im Reaktor (2) gebildet werden:
- mindestens zwei Filtrationsetagen (20a, 20b, 20c);
- und eine obere Ausgangsetage(17), wobei der Ausgang (14) für die gefilterten Abwässer in die obere Ausgangsetage (17) mündet;
wobei jede Filtrationsetage (20a, 20b, 20c) mit einer Schicht ihrer eigenen Filtriermittel (18) ausgestattet ist und im unteren Teil einen Ausgang (22a, 22b, 22c) zum Ableiten der überschüssigen Biomasse umfasst, wobei die Menge und die Dichte der Filtriermittel (18) in jeder Filtrationsetage (20a, 20b, 20c) derart sind, dass im Ableitmodus mindestens der untere Teil der unteren Etage(n) (20a, 20b), in die der Ausgang zum Ableiten (22a, 22b) mündet, ohne Filtriermittel ist, so dass die überschüssige Biomasse zurückgewinnbar ist.

2. Filter nach Anspruch 1, **dadurch gekennzeichnet, dass** die obere Ausgangsetage (17) ohne Filtriermittel (18) ist, wobei die besagte Etage (17) zwischen der oberen Wand (21) des Reaktors (2) und der gegenüberliegenden Wand (19c) gebildet wird.

3. Filter nach Anspruch 1 oder 2, **dadurch gekennzeichnet, dass** er ein Eingangsabteil (10) für die zu filtrierenden Abwässer und oxygeniertes Gas umfasst, wobei das besagte Abteil (10) zwischen der unteren Wand (9) des Reaktors (2) und einer für zu filtrierende Abwässer und oxygeniertes Gas durchlässigen Innenwand (12) gebildet wird.

4. Filter nach Anspruch 1 oder 2, **dadurch gekennzeichnet, dass** der Reaktor (2) eine Vielzahl von Öffnungen (13a, 13c) umfasst, die jeweils den Eingang (3) für die zu filtrierenden Abwässer und den Eingang (6) für oxygeniertes Gas bilden, wobei die besagten Öffnungen in die untere Wand (9) des Reaktors (2) eingearbeitet sind.

5. Filter nach einem der Ansprüche 1 bis 4, **dadurch gekennzeichnet, dass** die mit Öffnungen ausgestatteten Zwischenwände (19a, 19b, 19c) Gitter sind.

6. Filter nach einem der Ansprüche 1 bis 5, **dadurch gekennzeichnet, dass** mindestens ein Ausgang zum Ableiten (22a, 22b, 22c) eine mit Öffnungen ausgestattete Wand (19d, 19e, 19f) umfasst, die Mittel zum Zurückhalten der Filtriermittel (18) bilden.

7. Filter nach einem der Ansprüche 1 bis 6, **dadurch gekennzeichnet, dass** mindestens eine Filtrationsetage (20a, 20b, 20c) mit einem Mittel zur Erfassung (26) der Menge überschüssiger Biomasse ausgestattet ist.

8. Filter nach Anspruch 7, **dadurch gekennzeichnet, dass** das Mittel zu Erfassung (26) der Menge überschüssiger Biomasse ein Mittel zum Senden und Empfangen eines Wellenbündels umfasst.

9. Filter nach einem der Ansprüche 1 bis 8, **dadurch gekennzeichnet, dass** mindestens zwei Filtrationsetagen (20a, 20b, 20c) Filtriermittel (18) umfassen, die sich durch die Art ihres Trägers und/oder die fixierte Biomasse unterscheiden.

10. Filter nach Anspruch 9, **dadurch gekennzeichnet, dass** sich die Filtriermittel (18) durch ihre Dichte unterscheiden.

11. Filter nach einem der Ansprüche 1 bis 10, **dadurch gekennzeichnet, dass** die Träger Kugeln umfassen, deren Dichte von 0,5 bis 1 beträgt.

12. Filter nach einem der Ansprüche 1 bis 11, **dadurch gekennzeichnet, dass** die Träger Kugeln mit einem Durchmesser von 1 bis 30 mm umfassen.

13. Filter nach einem der Ansprüche 1 bis 12, **dadurch gekennzeichnet, dass** die Träger Kugeln umfassen, die von Kunststoffen oder Mineralien gebildet werden, die gebläht wurden.

14. Filter nach einem der Ansprüche 1 bis 13, **dadurch gekennzeichnet, dass** er Mittel zur Rezirkulation (27) der gefilterten Abwässer umfasst, die zwischen dem Ausgang (14) und dem Eingang (3) der Abwässer des Reaktors (2) vorgesehen sind, wobei die besagten Mittel (27) derart angeordnet sind, damit mindestens ein Teil der gefilterten Abwässer in den Reaktor (2) zur zusätzlichen Behandlung zurückleitbar (2) ist.

15. Filter nach Anspruch 14, **dadurch gekennzeichnet, dass** die Mittel zur Rezirkulation (27) mindestens eine mit einer Pumpe (29) verbundene Rezirkulationsleitung (28) umfassen.

16. Filter nach Anspruch 14 oder 15, **dadurch gekennzeichnet, dass** der Reaktor (2) weiterhin eine untere Etage zur Denitrifikation (30) der aus den Rezirkulationsmitteln (27) und in den Reaktor (2) eintretenden Abwässer umfasst, wobei sich der Eingang für oxygeniertes Gas (6) über der besagten Denitrifikationsetage (30) befindet.

17. Verfahren zur biologischen Filtration von Abwässern, das einen Filter (1) nach einem der vorangehenden Ansprüche verwendet, **dadurch gekennzeichnet, dass** es umfasst:
(i) eine Filtrationsphase, die die Schritte umfasst, die bestehen aus:
- Versorgung des Reaktors (2) mit zu filtrierenden Abwässern und oxygeniertem Gas, gemäß einer aufsteigenden Strömung, jeweils durch den Eingang (3) für die zu filtrierenden Abwässer und den Eingang (6) für oxygeniertes Gas,
- aufsteigende Zirkulation des besagten Gases und der besagten Abwässer in den verschiedenen aufeinanderfolgenden Filtrationsetagen (20a, 20b, 20c), so dass die besagten Abwässer gefiltert werden,
- Rückgewinnung der gefilterten Abwässer durch den Ausgang (14) des Reaktors (2), und
(ii) eine Waschphase, bei der die besagten Filtrationsetagen unabhängig voneinander von ihrer überschüssigen Biomasse befreibar sind, weswegen das Waschen selektiv durchführbar ist.

18. Verfahren nach Anspruch 17, **dadurch gekennzeichnet, dass** die Versorgung mit zu filtrierenden Abwässern und/oder oxygeniertem Gas kontinuierlich erfolgt.

19. Verfahren nach Anspruch 17, **dadurch gekennzeichnet, dass** die Versorgung mit zu filtrierenden Abwässern und/oder oxygeniertem Gas diskontinuierlich erfolgt.

20. Verfahren nach einem der Ansprüche 17 bis 19, **dadurch gekennzeichnet, dass** die besagte Waschphase einer Waschphase mindestens einer Filtrationsetage (20a, 20b, 20c) entspricht, bei der:
- der Eingang (3) für die zu filtrierenden Abwässer und der Eingang (6) für oxygeniertes Gas des Reaktors (2) geschlossen wird,
- danach der Ausgang zum Ableiten (22a, 22b, 22c) der zu waschenden Etage geöffnet wird, um die überschüssige Biomasse durch Entleeren durch Druckunterschied zwischen dem Oberteil des Reaktors (2) und dem besagten Ausgang zum Ableiten mitzunehmen.

21. Verfahren nach Anspruch 20, **dadurch gekennzeichnet, dass** die Waschphase durch Ermittlung einer Biomassemenge in mindestens einer Filtrationsetage (20a, 20b, 20c) ausgelöst wird, die über einer vordefinierten Schwelle liegt.

22. Verfahren nach Anspruch 21, **dadurch gekennzeichnet, dass** die Ermittlung der Biomassemenge durch Aussenden und Empfangen eines Wellenbündels erfolgt.

23. Verfahren nach einem der Ansprüche 17 bis 22, **dadurch gekennzeichnet, dass** das oxygenierte Gas Luft umfasst, die mit Oxydgas versetzt wurde.

24. Verfahren nach einem der Ansprüche 17 bis 23, **dadurch gekennzeichnet, dass** es einen Rezirkulationsschritt im Reaktor (2) mindestens eines Teils der gefilterten Abwässer umfasst, um eine zusätzliche Behandlung des besagten Teils der gefilterten Abwässer durchzuführen.

25. Verfahren nach Anspruch 24, **dadurch gekennzeichnet, dass** es einen Denitrifikationsschritt des besagten Teils der gefilterten Abwässer aus dem Rezirkulationsschritt durch Zirkulation des besagten Teils der gefilterten Abwässer in einer Denitrifikationsetage (30) umfasst.

26. Verfahren nach einem der Ansprüche 17 bis 25, **dadurch gekennzeichnet, dass** es einen Denitrifikationsschritt mindestens eines Teils der gefilterten Abwässer umfasst, bei dem der Eingang (3) für die zu filtrierenden Abwässer und der Eingang (6) für oxygeniertes Gas (6) des Reaktors (2) geschlossen wird, um die Abwässer im Reaktor (2) bis zur Ausbildung eines anoxischen Bereichs im besagten Reaktor zu halten.

27. Filtrationsanlage, **dadurch gekennzeichnet, dass** sie eine Vielzahl von Filtern (1) nach einem der Ansprüche 1 bis 16 umfasst, wobei die besagten Filter angeordnet sind, um parallel zu funktionieren, wobei die besagte Anlage (34) umfasst:
- einen Eingang (35) für die zu filtrierenden Abwässer, der mit dem Eingang (3) für die zu filtrierenden Abwässer jedes Filters (1) verbunden ist,
- einen Eingang (37) für oxygeniertes Gas, der mit dem Eingang (6) für oxygeniertes Gas jedes Filters (1) verbunden ist,
- einen Ausgang für die gefilterten Abwässer, der mit dem Ausgang (14) jedes Filters (1) verbunden ist,
- mindestens einen Ausgang zum Ableiten, der mit den Ausgängen zum Ableiten (22a, 22b, 22c) jedes Filters (1) verbunden ist,
wobei die Anlage unter anderem Mittel zur selektiven Unterbrechung (39) der Versorgung mit zu filtrierenden Abwässern jedes Filters (1), Mittel zur selektiven Unterbrechung (40) der Versorgung mit oxygeniertem Gas (34) jedes Filters (1), Mittel zur Steuerung jeweils der Filtration (43), des Stopps (44) und der Wiedergewinnung der überschüssigen Biomasse (45) umfasst, um gleichzeitig die Filtration der zu filtrierenden Abwässer durch eine minimale Anzahl von Filtern und den Stopp der anderen Filter zwecks Wiedergewinnung der überschüssigen Biomasse und/oder der Denitrifikation mindestens eines Teils der in den besagten anderen Filtern gefilterten Abwässer zu ermöglichen.

28. Abwasserklärwerk, **dadurch gekennzeichnet, dass** es mindestens einen Filter (1) nach einem der Ansprüche 1 bis 16 umfasst, oder eine Filtrationsanlage (34) nach Anspruch 27, wobei das besagte Werk weiterhin ein Vorklärbecken (100) umfasst, das mit Abwässern versorgt wird, wobei das besagte Vorklärbecken (100) eine Leitung zum Ableiten (109) der vorgeklärten Abwässer umfasst, die mit dem Eingang (3) für die zu filtrierenden Abwässer des Filters (1) verbunden ist, beziehungsweise mit dem Eingang (35) für die zu filtrierenden Abwässer der Filtrationsanlage (34), und Mittel zum Ableiten der beim Vorklären entstandenen Schlämme.

29. Abwasserklärwerk nach Anspruch 28, **dadurch gekennzeichnet, dass** das Vorklärbecken (100) umfasst:
- einen Behälter (101) mit einem Boden (103) und aufweisend, in bezug auf die Fließrichtung der Abwässer, einen stromaufwärtigen Teil, in den eine Leitung (107) zur Versorgung mit Abwässern mündet, und einen stromabwärtigen Teil, in den die Leitung (109) zum Ableiten der vorgeklärten Abwässer mündet,
- eine in dem Behälter (101) angeordnete Dekantationsfläche, die von der Oberseite mindestens einer Dekantationsplatte (114, 114') gebildet wird, wobei die besagte Platte eine mittlere Ebene aufweist, die etwa parallel zur Fließrichtung der Abwässer und auf einer Ebene schräg zur Fließrichtung der Abwässer und in bezug auf die orthogonale Projektion der Vertikalen in der besagten schrägen Ebene in einem Winkel (Alpha, Beta) geneigt ist,
wobei eine erste Gruppe mindestens einer Dekantationsplatte (114, 114a, 114b, 114c, 114d, 114e) in einem ersten Winkel (Alpha) von 15 bis 60 Grad und mindestens eine zweite Gruppe mindestens einer Dekantationsplatte (114', 114'a, 114'b, 114'c, 114'd, 114'e) in einem zweiten Winkel (Beta) von 15 bis 60 Grad geneigt ist, wobei die Winkel (Alpha, Beta), der Zustand der Oberfläche und der Reibungskoeffizient der Platten derart ausgewählt sind, dass sich die Schlämme beim Fließen der Abwässer im Behälter auf der Dekantationsoberfläche absetzen und danach in Richtung Boden des Behälters gleiten, wobei zwischen den Platten der zwei Gruppen mindestens ein Entsorgungsdurchgang (117) für die Schlämme vorgesehen ist, damit die auf den Oberseiten der Platten gesammelten Schlämme durch Schwerkraft auf den Boden (103) des Behälters (101) fallen.

30. Abwasserklärwerk nach Anspruch 28 oder 29, **dadurch gekennzeichnet, dass** es weiterhin ein Nachklärbecken (51) umfasst, das aufweist:
- einen Eingang für die zu klärenden Abwässer, der mit den Ausgängen zum Ableiten (22a, 22b, 22c) des Filters (1) verbunden ist,
- einen Ausgang für die geklärten Abwässer,
- Mittel zum Ableiten der Klärschlämme.

31. Abwasserklärwerk nach einem der Ansprüche 28 bis 30, **dadurch gekennzeichnet, dass** es weiterhin ein anaerobes Schlammfaulbecken (200) umfasst, das umfasst:
- einen Eingang zur Versorgung mit frischen Schlämmen, der mit den Mitteln zum Ableiten der Klärschlämme des Vorklärbeckens (100) verbunden ist,
- einen Ausgang zum Ableiten der Abwässer, der mit dem Eingang zur Versorgung mit zu klärenden Abwässern des Vorklärbeckens (100) verbunden ist,
- einen Ausgang zum Ableiten der ausgefaulten Schlämme.

32. Abwasserklärwerk nach Anspruch 31, **dadurch gekennzeichnet, dass** das Faulbecken (200) einen Behälter (201) mit einem etwa horizontalen Boden (203) umfasst, eine Leitung zur Versorgung (207) des Behälters mit frischen Schlämmen, eine Leitung zum Ableiten (209) der Abwässer außerhalb des Behälters und Mittel zum Ableiten (212) der ausgefaulten Schlämme außerhalb des Behälters, wobei der besagte Behälter mindestens eine Wand (213a, 213b, 213c) quer zur Fließrichtung der Abwässer umfasst, wobei die Wand ein stromaufwärtiges Abteil (218a, 218b, 218c) und ein stromabwärtiges Abteil (218b, 218c, 218d) definiert, damit der Behälter ein erstes stromaufwärtiges Abteil (218a) aufweist, in welches die Leitung (207) zur Versorgung mit frischen Schlämmen mündet, und ein letztes stromabwärtiges Abteil (218d), in welches die Leitung (209) zum Ableiten der Abwässer mündet, **dadurch gekennzeichnet, dass** die Wand (213a, 213b, 213c) in ihrem unteren Teil eine Öffnung für die Kommunikation (216) des stromaufwärtigen Abteils mit dem stromabwärtigen Abteil umfasst, um den Durchgang der Schlämme und die Zirkulation der Abwässer oberhalb und durch die Schlammschicht, die sich auf dem Boden des Behälters etwa horizontal befindet, vom ersten stromaufwärtigen Abteil (218a) bis zum letzten stromabwärtigen Abteil (218d) zu ermöglichen.

33. Abwasserklärwerk nach Anspruch 31 oder 32, **dadurch gekennzeichnet, dass** es weiterhin einen Eindicker (48) umfasst, der umfasst:
- einen Eingang, der mit dem Ausgang zum Ableiten der ausgefaulten Schlämme aus dem Faulbecken (200) verbunden ist,
- einen Ausgang für die eingedickten Schlämme,
- einen Ausgang für das Restwasser, der mit dem Eingang zur Versorgung des Vorklärbeckens (100) mit vorzuklärenden Abwässern verbunden ist.
